# EUROPEAN PATENT SPECIFICATION

(11) **EP 4 328 273 B1**
(45) Date of publication and mention of the grant of the patent: **25.06.2025**
(21) Application number: 22791699.6
(22) Date of filing: 18.04.2022
(51) Int. Cl.: C09D 5/02, C09D 175/04, C08G 18/00, C08G 18/28, C08G 18/73, C08G 18/80, C08G 18/10, C08G 18/62, C08G 18/08, C08G 18/32, C08G 18/48, C08G 18/69, C08G 18/44, C09D 175/06, C09D 175/08

(54) **BLOCKED ISOCYANATE COMPOSITION, AQUEOUS DISPERSION, COATING COMPOSITION AND COATING FILM**
BLOCKIERTE ISOCYANATZUSAMMENSETZUNG, WÄSSRIGE DISPERSION, BESCHICHTUNGSZUSAMMENSETZUNG UND BESCHICHTUNGSFILM
COMPOSITION D'ISOCYANATE BLOQUÉ, DISPERSION AQUEUSE, COMPOSITION DE REVÊTEMENT ET FILM DE REVÊTEMENT

(30) Priority: 21.04.2021 JP 2021071725
(43) Date of publication of application: 28.02.2024
(73) Proprietor: Asahi Kasei Kabushiki Kaisha, Tokyo 1000006 (JP)
(72) Inventor: MIWA Yuichi, Tokyo 100-0006 (JP); WATANABE Kana, Tokyo 100-0006 (JP); NAKANISHI Yuki, Tokyo 100-0006 (JP)
(74) Representative: Strehl & Partner mbB
(86) International application number: PCT/JP2022/018017
(87) International publication number: WO 2022/224927

(56) References cited:
- EP-A1- 3 527 594
- EP-A1- 3 527 595
- EP-A1- 3 730 529
- EP-A1- 3 783 041
- WO-A1-2018/070532
- JP-A- 2000 044 649
- JP-A- 2005 154 777
- JP-A- 2014 502 297

## Description

### [Technical Field]

The present invention relates to a blocked isocyanate composition, an aqueous dispersion, a coating composition, and a coating film.

### [Background Art]

A coating film formed from a urethane-based coating composition that uses polyisocyanate as a curing agent has excellent chemical resistance, flexibility, and the like. In particular, when a polyisocyanate obtained from an aliphatic diisocyanate or an alicyclic diisocyanate is used, the weather resistance is further improved. Therefore, the polyisocyanate is used as a two-component urethane-based coating composition that cures at room temperature or a thermosetting one-component urethane-based coating composition in construction, heavy anticorrosion, automobiles, industrial applications, and repairs thereof.

In order to reduce the burden on the global environment, studies are underway to make a water-based polyisocyanate which can be used as a curing agent in a urethane-based coating composition. Many proposals have also been made regarding blocked polyisocyanates, which are curing agents in one-component coating compositions.

PTL 1 discloses that a pyrazole blocked polyisocyanate having a predetermined structure can be used in a water-dispersible coating composition.

PTL 2 discloses a water-dispersible polyisocyanate composition containing 4-isocyanatomethyl-1,8-octamethylene diisocyanate.

### [Citation List]

### [Patent Literature]

[PTL 1] Japanese Translation of PCT International Application Publication No. H11-512772
[PTL 2] Japanese Unexamined Patent Application Publication No. 2000-44649

### [Summary of Invention]

### [Technical Problem]

However, the blocked polyisocyanate composition described in PLT 1 may lack impact resistance when used in a coating film.

The blocked polyisocyanate composition described in PLT 2 may lack stability over time during storage of an aqueous dispersion of the composition.

EP 3 783 041 A1 describes compositions comprising polyisocyanates which are bloked with a hydrophilic compound, the compositions offering good storage stability and curing behaviour.

The present invention has been made in view of the above-mentioned circumstances, and aims to provide a blocked isocyanate composition having favorable dispersion stability in water, realizing constant particle size during storage when the blocked isocyanate composition is made into an aqueous dispersion, exhibiting stable adhesion to a substrate when the blocked isocyanate composition after storage in the presence of water is made into a coating film, and exhibiting excellent chemical resistance and impact resistance when made into a coating film, as well as an aqueous dispersion, a coating composition, and a coating film, containing the blocked isocyanate composition.

### [Solution to Problem]

The present invention encompasses the following aspects.
(1) A blocked isocyanate composition containing a blocked isocyanate obtained from a triisocyanate compound (A) of the following general formula (I), a diol compound (B), a hydrophilic compound (C), and a blocking agent (D). 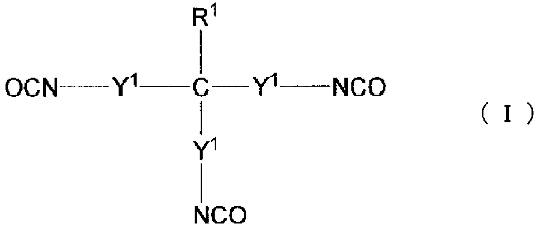 (In the general formula (I), each of plural Y¹ is independently a single bond or a C1-20 divalent hydrocarbon group which may have at least one structure selected from the group consisting of an ester structure and an ether structure. Each of plural Y¹ is identical to or different from each other. R¹ is a hydrogen atom or a C1-12 monovalent hydrocarbon group.)
(2) The blocked isocyanate composition according to (1), wherein the diol compound (B) is at least one selected from the group consisting of non-polymerizable diols, polyester diols, polycarbonate diols and polyolefin diols.
(3) The blocked isocyanate composition according to (1) or (2), wherein the molecular weight of the diol compound (B) is 90 to 5000.
(4) The blocked isocyanate composition according to (3), wherein the molecular weight of the diol compound (B) is 400 to 2000.
(5) The blocked isocyanate composition according to any one of (1) to (4), wherein the amount of the structural unit formed from the diol compound (B) relative to the mass of the blocked isocyanate is 10.0% by mass to 40.0% by mass.
(6) The blocked isocyanate composition according to any one of (1) to (5), wherein the hydrophilic compound (C) is a nonionic hydrophilic compound.
(7) The blocked isocyanate composition according to (6), wherein the hydrophilic compound (C) is polyethylene glycol monomethyl ether.
(8) The blocked isocyanate composition according to (7), wherein the ethylene oxide addition number of the polyethylene glycol monomethyl ether is 7.0 to 18.0.
(9) The blocked isocyanate composition according to any one of (1) to (8), wherein the amount of the structural unit formed from the hydrophilic compound (C) relative to the mass of the blocked isocyanate is 20.0% by mass to 40.0% by mass.
(10) The blocked isocyanate composition according to any one of (1) to (9), wherein the triisocyanate compound (A) is 4-isocyanatomethyl-1,8-octamethylene diisocyanate.
(11) The blocked isocyanate composition according to any one of (1) to (10), wherein the blocking agent (D) is at least one compound selected from the group consisting of oxime-based compounds, amine-based compounds, and pyrazole-based compounds.
(12) An aqueous dispersion containing: the blocked isocyanate composition of any one of (1) to (11); and water.
(13) The aqueous dispersion according to (12), wherein the average dispersed particle size of the blocked isocyanate composition is 10 nm to 200 nm.
(14) A coating composition containing: the blocked isocyanate composition of any one of (1) to (11); and a polyol.
(15) A coating film formed by curing the coating composition of (14).

### [Advantageous Effects of Invention]

The blocked isocyanate composition of the above-mentioned aspect makes it possible to provide a blocked isocyanate composition having favorable dispersion stability in water, realizing both a constant particle size during storage when the blocked isocyanate composition is made into an aqueous dispersion and stable adhesion of a coating film to a substrate when the blocked isocyanate composition after storage in the presence of water is made into a coating film, and exhibiting excellent chemical resistance and impact resistance when the blocked isocyanate composition is made into a coating film.

### [Description of Embodiments]

Hereinafter, an embodiment for carrying out the present invention (hereinafter, simply referred to as "the present embodiment") will be described in detail. The present embodiments described below are examples explaining the present invention, and are not intended to limit the present invention to the following contents. The present invention may be appropriately modified to be performed within the scope of the gist thereof.

In the present specification, the term "polyisocyanate" refers to a polymer in which plural monomers having at least one isocyanate group (-NCO) are bonded.

In the present specification, the term "polyol" refers to a compound having at least two hydroxy (-OH) groups.

### <<Blocked isocyanate composition>>

The blocked isocyanate composition of the present embodiment contains a blocked isocyanate formed from a triisocyanate compound of the following general formula (I) (hereinafter, may be simply referred to as "triisocyanate compound (A)"), a diol compound (B), a hydrophilic compound (C), and a blocking agent (D).

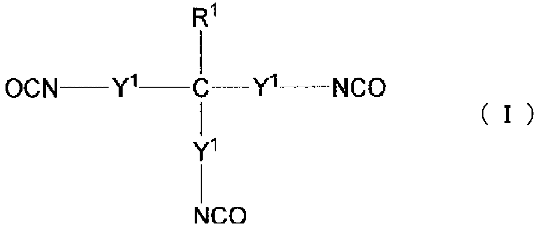

(In the general formula (I), each of plural Y¹ is independently a single bond or a C1-20 divalent hydrocarbon group which may have at least one structure selected from the group consisting of an ester structure and an ether structure. Each of plural Y¹ is identical to or different from each other. R¹ is a hydrogen atom or a C1-12 monovalent hydrocarbon group.)

The above-mentioned constitution of the blocked isocyanate composition of the present embodiment contributes to realization of favorable dispersion stability in water, constant particle size during storage when the blocked isocyanate composition is made into an aqueous dispersion, stable adhesion of a coating film to a substrate when the blocked isocyanate composition after storage in the presence of water is made into a coating film, and excellent chemical resistance and impact resistance when made into a coating film.

Constituent components of the blocked isocyanate composition of the present embodiment will be explained below in detail.

### <Blocked isocyanate>

A blocked isocyanate is formed from a triisocyanate compound (A), a diol compound (B), a hydrophilic compound (C), and a blocking agent (D). Namely, the blocked isocyanate is a reactant of the triisocyanate compound (A), the diol compound (B), the hydrophilic compound (C), and the blocking agent (D). **In** the blocked isocyanate, a structural unit formed from the diol compound (B) is introduced into at least some of the isocyanate groups of the triisocyanate compound (A), a structural unit formed from the hydrophilic compound (C) (namely, a hydrophilic group) is introduced into at least some of the isocyanate groups of the triisocyanate compound (A), and at least some of the isocyanate groups of the triisocyanate compound (A) are blocked by the blocking agent (D).

### [Triisocyanate compound (A)]

### (Y¹)

In the general formula (I), each of plural Y¹ is independently a single bond or a C1-20 divalent hydrocarbon group which may have at least one structure selected from the group consisting of an ester structure and an ether structure. Each of plural Y¹ is identical to or different from each other.

The C1-20 divalent hydrocarbon group in which neither an ester structure nor an ether structure is contained as Y¹ may be an aliphatic group or an aromatic group. The aliphatic group may be linear, branched or cyclic.

Examples of the linear or branched aliphatic group include alkanediyl groups (alkylene groups), and alkylidene groups.

Examples of the cyclic aliphatic group include cycloalkylene groups.

Examples of the aromatic group include arylene groups such as a phenylene group.

Among them, the C1-20 divalent hydrocarbon group is preferably an alkylene group.

Examples of the alkylene group include a methylene group, a dimethylene group, a trimethylene group, a tetramethylene group, and an octamethylene group. Among them, a tetramethylene group is preferable as the alkylene group.

Examples of the C1-20 divalent hydrocarbon group having at least one structure selected from the group consisting of an ester structure (-COO-) and an ether structure (-O-) as Y¹ include a group of the following general formula (II) (hereinafter, may be referred to as "group (11)").

^{*1}-(CH₂)ₙ₁-X-(CH₂)ₙ₂-^{*2} (II)

In the general formula (II), *1 indicates a bonding portion to C in the general formula (1), and *2 indicates a bonding portion to N in the general formula (1). X is at least one structure selected from the group consisting of an ester structure (-COO-) and an ether structure (-O-).

n1 and n2 are integers satisfying 1 ≦ n1+n2 ≦ 20. Namely, n1 and n2 cannot be 0 simultaneously, and n2 is preferably 1 or more.

Among them, n1 and n2 are each independently preferably an integer of 0 to 20, more preferably an integer of 0 to 4, and even more preferably an integer of 0 to 2.

As the combination of n1 and n2, a combination of n=0 and n2=2, or a combination of n1=2 and n2=2 is preferable, for example.

In the group (II), X is preferably an ester structure.

In the case where at least one of plural Y¹ has at least one selected from the group consisting of aliphatic groups and aromatic groups, the viscosity of the blocked isocyanate composition of the present embodiment can be decreased.

In the case where at least one of plural Y¹ has at least one selected from the group consisting of aliphatic groups and alicyclic groups, the weather resistance of a coating film can be further improved.

In the case where at least one of plural Y¹ has an ester structure, the heat resistance of the blocked isocyanate composition of the present embodiment can be further improved, and the reactivity of an isocyanate group when used as a curing agent of a coating composition can be further improved.

(2) R¹

R¹ is a hydrogen atom or a C1-12 monovalent hydrocarbon group. The hydrocarbon group as R¹ is not particularly limited, and examples thereof include alkyl groups, alkenyl groups, and alkynyl groups. Among them, R¹ is preferably a hydrogen atom.

In the case where at least one of plural Y¹ has at least one selected from the group consisting of aliphatic groups and aromatic groups, preferable examples of the triisocyanate compound (A) include 4-isocyanatomethyl-1,8-octamethylene diisocyanate disclosed in Japanese Unexamined Patent Application Publication No. Sho 57-198761 (Reference document 1) (hereinafter, may be referred to as "NTI", the molecular weight of which is 251), 1,3,6-hexamethylene triisocyanate disclosed in Japanese Unexamined Patent Application Publication No. Sho 57-198760 (Reference document 2) (hereinafter, may be referred to as "HTI", the molecular weight of which is 209), bis(2-isocyanatoethyl) 2-isocyanatoglutarate disclosed in Japanese Examined Patent Application Publication No. Hei 4-1033 (Reference document 3) (hereinafter, may be referred to as "GTI", the molecular weight of which is 311), and lysine triisocyanate disclosed in Japanese Unexamined Patent Application Publication No. Sho 53-135931 (Reference document 4) (hereinafter, may be referred to as "LTI", the molecular weight of which is 267).

Among them, in the case where at least one of plural Y¹ has at least one selected from the group consisting of aliphatic groups and aromatic groups, the triisocyanate compound (I) is preferably NTI, HTI or LTI, and more preferably NTI or LTI, from the viewpoint that the reactivity of isocyanate groups can be further improved, and even more preferably NTI, from the viewpoint that the impact resistance of the resultant coating film is particularly excellent.

The lower limit of the molecular weight of the triisocyanate compound (A) is preferably 139, more preferably 150, even more preferably 180, and particularly preferably 200.

In contrast, the upper limit of the molecular weight of the triisocyanate compound (A) is preferably 1000, more preferably 800, even more preferably 600, and particularly preferably 400.

The molecular weight of the triisocyanate compound (A) is preferably 139 to 1000, more preferably 150 to 800, even more preferably 180 to 600, and particularly preferably 200 to 400.

The crystallization can be further suppressed by making the molecular weight of the triisocyanate compound (A) be the above-mentioned lower limit or more, and the decrease in viscosity can be easily achieved by making the molecular weight of the triisocyanate compound (A) be the above-mentioned upper limit or less.

The triisocyanate compound (A) may be obtained, for example, by isocyanating an amine such as an amino acid derivative, an ether amine, or an alkyl triamine.

Examples of the amino acid derivative include 2,5-diaminovaleric acid, 2,6-diaminohexanoic acid, aspartic acid, and glutamic acid. These amino acid derivatives are diamine monocarboxylic acids or monoamine dicarboxylic acids. Therefore, the number of amino groups can be controlled by esterifying carboxy groups with alkanolamine such as ethanolamine. Alternatively, the number of amino groups can be controlled by esterifying carboxy groups with alcohol such as methanol.

The obtained amine having an ester structure can be made into a triisocyanate compound having an ester structure by phosgenation of the amine.

Examples of ether amine include polyoxyalkylene triamine manufactured by MITSUI FINE CHEMICALS, INC., under the trade name of "D403". These ether amines are triamines and can be made into triisocyanate compounds having an ether structure by phosgenation of amines.

Examples of the alkyl triamine include 4-aminomethyl-1,8-octanediamine. The alkyl triamine can be made into a triisocyanate consisting of hydrocarbons by phosgenation of an amine or the like.

In the blocked isocyanate composition of the present embodiment, the amount of the structural unit formed from the triisocyanate compound (A) relative to the mass of the blocked isocyanate is preferably 10% by mass or more, more preferably 15% by mass or more, and even more preferable 20% by mass or more. On the other hand, the amount of the structural unit formed from the triisocyanate compound (A) relative to the mass of the blocked isocyanate is preferably less than 50% by mass, more preferably 40% by mass or less, and more preferably 35% by mass or less.

The amount of the structural unit formed from the triisocyanate compound (A) relative to the mass of the blocked isocyanate is preferably 10% by mass or more and less than 50% by mass, more preferably 15% by mass or more and 40% by mass or less, and even more preferably 20% by mass or more and 35% by mass or less.

The particle size stability of an aqueous dispersion during storage, and the impact resistance or the chemical resistance of a coating film can be further improved by making the amount of the structural unit formed from the triisocyanate compound (A) be within the above-mentioned range.

The structural unit formed from the triisocyanate compound (A) has a structure in which an isocyanate group that reacts with the diol compound (B), the hydrophilic compound (C) or the blocking agent (D) is removed from the general formula (1).

The amount of the structural unit formed from the triisocyanate compound (A) relative to the mass of the blocked isocyanate is measured by ¹³C-NMR measurement, for example.

### [Other isocyanate compounds]

The blocked isocyanate composition of the present embodiment may further contain other isocyanate compounds in addition to the above-mentioned triisocyanate compound (A) within a range in which effects exhibited by the blocked isocyanate composition of the present embodiment are not impaired.

Examples of other isocyanate compounds include diisocyanates and polyisocyanates which have an aliphatic group, an alicyclic group, or an aromatic group.

Examples of the diisocyanate having an aliphatic group include tetramethylene diisocyanate (TMDI), pentamethylene diisocyanate (PDI), hexamethylene diisocyanate (HDI), 2,2,4-trimethylhexane-1,6-diisocyanate, 2-methylpentane-1,5-diisocyanate (MPDI), and lysine diisocyanate (LDI).

Examples of the diisocyanate having an alicyclic group include 1,3-bis(isocyanatomethyl)-cyclohexane (1,3-H6-XDI), 3(4)-isocyanatomethyl-1-methylcyclohexyl isocyanate (IMCI), isophorone diisocyanate (IPDI), and bis(isocyanatomethyl)-norbornane (NBDI).

Examples of the diisocyanate having an aromatic group include 1,3-bis(isocyanatomethyl)-benzene, 1,3-bis(2-isocyanatopropyl-2)benzene, and 4,4'-dicyclohexylmethane diisocyanate (H12MDI).

Among them, the diisocyanate is preferably HDI or IPDI from the viewpoint of mechanical properties and ease of industrial availability.

Examples of the polyisocyanate include polyisocyanate compounds formed by polymerizing the above-mentioned triisocyanate compound (A) or diisocyanate to have in a molecule thereof at least one selected from the group consisting of an isocyanurate structure, a burette structure, a uretdione structure, an iminooxadiazinedione structure, a urethane structure and an allophanate structure.

One of these other isocyanate compounds may be used alone or at least two thereof may be used in combination.

### [Diol compound (B)]

A diol compound (B) is an alcohol compound having two hydroxy groups, and is preferably at least one selected from the group consisting of non-polymerizable diols and polymerizable diols.

The term "non-polymerizable diol" refers to a diol having a single molecular weight, and is also called a diol monomer. In contrast, the term "polymerizable diol" refers to a polydiol formed by polymerizing monomers to have a molecular weight distribution.

Examples of the non-polymerizable diol include ethylene glycol, diethylene glycol, triethylene glycol, propylene glycol, dipropylene glycol, tripropylene glycol, 1,2-propanediol, 1,3-propanediol, 1,2-butanediol, 1,3-butanediol, 1,4-butanediol, 2,3-butanediol, 2-methyl-1,2-propanediol, 1,5-pentanediol, 2-methyl-2,3-butanediol, 1,6-hexanediol, 1,2-hexanediol, 2,5-hexanediol, 2-methyl-2,4-pentanediol, 2,3-dimethyl-2,3-butanediol, 2-ethyl-hexanediol, 1,2-octanediol, 1,2-decanediol, 2,2,4-trimethylpentanediol, 2-butyl-2-ethyl-1,3-propanediol, and 2,2-diethyl-1,3-propanediol. Among them, the non-polymerizable diol is preferably 1,3-butanediol or 1,4-butanediol from the viewpoint of hardness of a coating film and the water-dispersible stability.

Examples of the polymerizable diol include polyester diols, polyether diols, polycarbonate diols, and polyolefin diols.

Examples of the polyester diol include: polyester diols formed by condensation reaction of one of or a mixture of dibasic acids selected from the group consisting of succinic acid, adipic acid, sebacic acid, dimer acid, maleic anhydride, phthalic anhydride, isophthalic acid, and terephthalic acid, with one of or a mixture of divalent alcohols selected from the group consisting of ethylene glycol, propylene glycol, diethylene glycol, and neopentyl glycol; and polycaprolactone diols formed by subjecting ε-caprolactone to a ring-opening polymerization using a divalent alcohol. Among them, polycaprolactone diol is preferable.

A commercially available polyester diol may be used as the polyester diol. Examples of the commercially available polyester diol include commercially available products manufactured by Daicel Corporation under the trade names of "PLACCEL (registered trademark) 205" (the number-average molecular weight of which is 530), "PLACCEL (registered trademark) 212" (the number-average molecular weight of which is 1250), and "PLACCEL (registered trademark) 240" (the number-average molecular weight of which is 4000).

Examples of the polyether diols include: polyether diols formed by random or block addition of one of or a mixture of alkylene oxides selected from the group consisting of ethylene oxide, propylene oxide, butylene oxide, cyclohexene oxide, and styrene oxide, to one of or a mixture of divalent hydroxy compounds using a catalyst such as a hydroxide of lithium, sodium, or potassium, a strongly basic catalyst such as an alcoholate or an alkylamine; or a composite metal cyanide complex such as a metalloporphyrin or a zinc hexacyanocobaltate complex; and polyether diols formed by reacting an alkylene oxide with a polyamine compound such as ethylene diamine.

A commercially available polyether diol may be used as the polyether diol. Examples of the commercially available polyether diol include: commercially available polyethylene glycols manufactured by SANYO CHEMICAL INDUSTRIES, LTD., under the trade names of "PEG-400" (the number-average molecular weight of which is 400), "PEG-1000" (the number-average molecular weight of which is 1000), and "PEG-2000" (the number-average molecular weight of which is 2000); and commercially available polypropylene glycols manufactured by AGC Inc., under the trade names of "EXCENOL (registered trademark) 420" (the number-average molecular weight of which is 400), and "EXCENOL (registered trademark) 3020" (the number-average molecular weight of which is 3200).

The polycarbonate diol has repeating structural units in which two alcohol groups and one carbonate group are dehydrated and condensed. Furthermore, the polycarbonate diol is preferably formed by copolymerizing a first C2-20 diol and a second C2-20 diol (hereinafter, referred to as "two diols") and a carbonate compound. Thus, workability tends to be further improved.

Examples of a method of producing a polycarbonate diol include: a method in which two diols and a carbonate compound are subjected to at least one reaction selected from the group consisting of a dealcoholization reaction and a dephenolation reaction; and a method in which a polycarbonate polyol having a high molecular weight is subjected to a transesterification reaction using two diols. The method of reacting two diols with a carbonate compound is not particularly limited, a conventionally-known method may be conducted, and any of various methods described on pages 9 to 20 of "Polymer Reviews, Vol. 9" written by H. Schnell (issued by Interscience Publishers, USA, 1964) may be used.

A commercially available polycarbonate diol may be used as the polycarbonate diol. Examples of the commercially available polycarbonate diol include ones manufactured by ASAHI KASEI KABUSHIKI KAISHA under the trade names of "DURANOL T5650E" (the number-average molecular weight of which is 500), "DURANOL T5650J" (the number-average molecular weight of which is 800), "DURANOL T5651" (the number-average molecular weight of which is 1000), and "DURANOL T5652" (the number-average molecular weight of which is 2000).

Examples of the polyolefin diol include: polybutadienes having two hydroxy groups; hydrogenated polybutadienes; polyisoprene; and hydrogenated polyisoprenes. Among them, polybutadienes having two hydroxy groups are preferable.

Among them, the polymerizable diol is preferably polycarbonate diol from the viewpoint of a balance between strength and elongation of a coating film.

The molecular weight of the diol compound (B) is preferably 90 or more, and more preferably 400 or more. In contrast, the molecular weight of the diol compound (B) is preferably 5000 or less, more preferably 2000 or less, and even more preferably 1500 or less. The molecular weight of the diol compound (B) is preferably 90 to 5000, more preferably 400 to 2000, and even more preferably 400 to 1500.

The toughness of a coating film is further improved by making the molecular weight of the diol compound (B) be the above-mentioned lower limit or more. In contrast, an aqueous dispersion becomes more stable without precipitating or separating by making the molecular weight of the diol compound (B) be the above-mentioned upper limit or less.

In the case where the diol compound (B) is a polymerizable diol, the molecular weight is a number-average molecular weight, and may be measured by gel permeation chromatography, for example. Among the diol compounds (B) used in Examples below, the number-average molecular weight shown in the manufacturer's catalog is indicated as the molecular weight of polymerizable diol.

Among them, the diol compound (B) is preferably polycarbonate diol or polycaprolactone diol, more preferably a polycarbonate diol having a molecular weight of 500 to 2000 or a polycaprolactone diol having a molecular weight of 500 to 1500, and even more preferably a polycarbonate diol having a molecular weight of 500 to 2000, from the viewpoint that the storage stability when the blocked isocyanate composition is made into an aqueous dispersion and the adhesion to a substrate, the chemical resistance and impact resistance when the blocked isocyanate composition is made into a coating film are improved.

In the blocked isocyanate composition of the present embodiment, the amount of the structural unit formed from the diol compound (B) relative to the mass of the blocked isocyanate is preferably 0.5% by mass or more, more preferably 2.0% by mass or more, and even more preferably 10.0% by mass or more. In contrast, the amount of the structural unit formed from the diol compound (B) relative to the mass of the blocked isocyanate is preferably less than 70.0% by mass, more preferably 40.0% by mass or less, and even more preferably 30.0% by mass or less.

The amount of the structural unit formed from the diol compound (B) relative to the mass of the blocked isocyanate is preferably 0.5% by mass to less than 70.0% by mass, more preferably 2.0% by mass to 40.0% by mass, even more preferably 10.0% by mass to 40.0% by mass, and particularly preferably 10.0% by mass to 30.0% by mass.

The particle size stability of an aqueous dispersion during storage or the impact resistance of a coating film is improved by making the amount of the structural unit formed from the diol compound (B) be the above-mentioned lower limit or more. In contrast, the particle size stability of an aqueous dispersion during storage or the chemical resistance of a coating film is improved by making the amount of the structural unit formed from the diol compound (B) be the above-mentioned upper limit or less.

The structural unit formed from the diol compound (B) has a structure in which a hydroxy group which reacts with an isocyanate group of the triisocyanate compound (A) is removed from the diol compound (B).

The amount of the structural unit formed from the diol compound (B) relative to the mass of the blocked isocyanate may be measured by ¹³C-NMR measurement, for example.

### [Hydrophilic compound (C)]

A hydrophilic compound (C) has at least one molecule of an active hydrogen group which can react with one molecule of an isocyanate group of an isocyanate compound which is a feedstock of the blocked isocyanate composition, such as the triisocyanate compound (A). The hydrophilic compound (C) preferably has one molecule of an active hydrogen group. Namely, the hydrophilic compound (C) can react per molecule thereof with one molecule of an isocyanate group of an isocyanate compound which is a feedstock of the blocked isocyanate composition.

Although the active hydrogen group is not particularly limited, examples thereof include a hydroxy group, an amino group, a mercapto group, and a carboxylic acid group.

Although such a hydrophilic compound (C) is not particularly limited, the hydrophilic compound (C) is preferably at least one selected from the group consisting of nonionic hydrophilic compounds, anionic hydrophilic compounds, and cationic hydrophilic compounds, and more preferably a nonionic hydrophilic compound, from the viewpoint of ease of industrial availability and compatibility with a polyol used together.

### (Nonionic hydrophilic compound)

Although the nonionic hydrophilic compound is not particularly limited, examples thereof include polyalkylene glycol alkyl ethers. The polyalkylene glycol alkyl ethers have a structure of the following general formula (III).

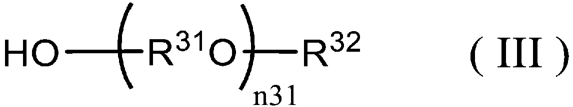

(In the general formula (III), R³¹ is a C1-4 alkylene group, R³² is a C1-4 alkyl group, and n31 is 3.0 to 20.0.)

In the general formula (III), R³¹ is a C1-4 alkylene group from the viewpoint of imparting hydrophilicity, and is preferably a C2 ethylene group from the viewpoint of imparting more hydrophilicity.

R³² is a C1-4 alkyl group from the viewpoint of imparting hydrophilicity, and is preferably a C1 methyl group from the viewpoint of imparting more hydrophilicity.

A polyalkylene glycol alkyl ether is not a single component but an aggregate of substances having different numbers of n31, which indicates the polymerization degree (hereinafter, may be referred to as "polymerization degree n31" or simply "n31"). Therefore, the polymerization degree n31 is indicated by an average value thereof.

When a polyisocyanate is blended into a water-based main agent, the viscosity-increase when mixed with the main agent often causes a problem. In the case where the viscosity is excessively increased, the polyisocyanate cannot be uniformly dispersed in the main agent, which tends to deteriorate physical properties of a coating film.

Therefore, n31 is preferably 3.0 to 20.0, more preferably 3.5 to 20.0, even more preferably 4.0 to 20.0, particularly preferably 5.0 to 20.0, and most preferably 7.0 to 18.0, from the viewpoint of dispersibility in water, particle size stability during storage when made into an aqueous dispersion, and dispersibility in the main agent. When n31 is the above-mentioned lower limit or more, the emulsifying capacity is enhanced, and therefore the dispersibility tends to be further improved. In contrast, when n31 is the above-mentioned upper limit or less, the viscosity-increase is prevented, and therefore the dispersion tends to be further easily realized.

At least two polyalkylene glycol alkyl ethers in which n31 is different from each other may be used in combination. n31 of the polyalkylene glycol alkyl ether can be measured by a proton nuclear magnetic resonance (NMR) method, and specifically by the method mentioned in Examples below.

Although the polyalkylene glycol alkyl ether is not limited to the following compounds, examples thereof include polyethylene glycol (mono)methyl ether, poly(ethylene, propylene) glycol (mono)methyl ether, and polyethylene glycol (mono)ethyl ether. The polyethylene glycol (mono)methyl ether is preferable from the viewpoint of imparting hydrophilicity. The ethylene oxide addition number of the polyethylene glycol (mono)methyl ether is preferably 7.0 to 18.0 from the viewpoint of dispersibility in water, particle size stability during storage when made into an aqueous dispersion and dispersibility in the main agent.

The number of hydroxy groups in the polyalkylene glycol alkyl ether is preferably one from the viewpoint of decreasing the viscosity of the blocked isocyanate composition.

In the blocked isocyanate composition of the present embodiment, the amount of the structural unit formed from the hydrophilic compound (C) relative to the mass of the blocked isocyanate is preferably 0.5% by mass or more, more preferably 15.0% by mass or more, even more preferably 18.0% by mass or more, and particularly preferably 20.0% by mass or more. In contrast, the amount of the structural unit formed from the hydrophilic compound (C) relative to the mass of the blocked isocyanate is preferably less than 50.0% by mass, more preferably 45.0% by mass or less, and even more preferably 40.0% by mass or less.

The amount of the structural unit formed from the hydrophilic compound (C) relative to the mass of the blocked isocyanate is preferably 0.5% by mass to less than 50.0% by mass, more preferably 15.0% by mass to 45.0% by mass, even more preferably 18.0% by mass to 45.0% by mass, and particularly preferably 20.0% by mass to 40.0% by mass.

The dispersibility in water, the particle size stability during storage when made into an aqueous dispersion and the chemical resistance when made into a coating film are further improved by making the amount of the structural unit formed from the hydrophilic compound (C) be the above-mentioned lower limit or more. In contrast, the adhesion of a coating film to a substrate when a blocked isocyanate composition after storage in the presence of water is made into a coating film is further stabilized, and the drying property and the water resistance when made into a coating film are further improved by making the amount of the structural unit formed from the hydrophilic compound (C) be the above-mentioned upper limit or less.

Although the method of controlling the amount of the structural unit formed from the hydrophilic compound (C) to be within the above-mentioned range is not limited to the following method, examples thereof include a method in which the blend ratio of the hydrophilic compound (C) to the triisocyanate compound (A) is adjusted.

The structural unit formed from the hydrophilic compound (C) has a structure in which a group which reacts with an isocyanate group of the triisocyanate compound (A) is removed from the hydrophilic compound (C).

The amount of the structural unit formed from the hydrophilic compound (C) relative to the mass of the blocked isocyanate is measured by a ¹³C-NMR measurement, for example.

The blocked isocyanate composition in which the hydrophilic compound (C) is the nonionic hydrophilic compound preferably further contains a phosphoric acid compound from the viewpoint of the dispersibility in water.

Although the phosphoric acid compound is not particularly limited, examples thereof include acidic phosphoric acid esters, acidic phosphite esters, acidic hypophosphite esters, particular polyether phosphonates (such as a commercially available product under the trade name of RHODAFAC (registered trademark) (manufactured by Solvay Nicca, Ltd.)). Among them, the acidic phosphoric acid esters are preferable.

The acidic phosphoric acid ester is a compound having both an acidic group and an ester group. Specific examples of the acidic phosphoric acid ester include C2-8 monoalkyl phosphates, monoalkyl phosphites, monoaryl phosphates and monoaryl phosphites; and C4-16 dialkyl phosphates, dialkyl phosphites, diaryl phosphates, and diaryl phosphites.

Specific examples of the C2-8 monoalkyl phosphates, monoalkyl phosphites, monoaryl phosphates and monoaryl phosphites include monooctyl phosphate, monolauryl phosphate, monophenyl phosphate, monolauryl phosphite, and monophenyl phosphite.

Specific examples of the C4-16 dialkyl phosphates, dialkyl phosphites, diaryl phosphates, and diaryl phosphites include dioctyl phosphate, dilauryl phosphate, diphenyl phosphate, dilauryl phosphite, and diphenyl phosphite.

Among them, C3-8 monoalkyl phosphates or C6-16 dialkyl phosphates are preferable, and monooctyl phosphate or dioctyl phosphate is more preferable.

One of these acidic phosphoric acid esters may be added alone or at least two thereof may be added simultaneously or sequentially.

The amount of the phosphoric acid compound relative to the total mass (100% by mass) of the blocked isocyanate composition, the amount being converted to the mass of phosphorus atom, is preferably 0.0001% by mass or more, more preferably 0.0002% by mass or more, and even more preferably 0.0005% by mass or more, from the viewpoint of the dispersibility in water. In contrast, the amount of the phosphoric acid compound relative to the total mass (100% by mass) of the blocked isocyanate composition, the amount being converted to the mass of phosphorus atom, is preferably 1.0% by mass or less, more preferably 0.5% by mass or less, and even more preferably 0.2% by mass or less, from the viewpoint of the external appearance of a coating film.

Although the method of controlling the amount of phosphorus atom to be within the above-mentioned range is not limited to the following method, examples thereof include a method in which the blend ratio of the phosphoric acid compound to the triisocyanate compound (A) is controlled.

The amount of the phosphoric acid compound may be measured by an inductively coupled plasma atomic emission spectroscopy (ICP-AES) method, for example.

Although the phosphoric acid compound may be added before, during or after the reaction of the triisocyanate compound (A) and the nonionic hydrophilic compound, the phosphoric acid compound is preferably added before the reaction from the viewpoint of further improving the dispersibility in water.

### (Anionic hydrophilic compound)

Although the anionic hydrophilic compound is not particularly limited, the anionic hydrophilic compound is preferably at least one selected from the group consisting of compounds having a carboxylic acid group, compounds having a phosphoric acid group, and compounds having a sulfonic acid group.

Although there is no particular limitation on the compound having a carboxylic acid group, examples thereof include carboxylic acids having (a) hydroxyl group(s), such as: monohydroxycarboxylic acids, such as 1-hydroxyacetic acid, 3-hydroxypropanoic acid, 12-hydroxy-9-octadecanoic acid, hydroxypivalic acid, and lactic acid; and polyhydroxy carboxylic acids such as dimethylol acetic acid, 2,2-dimethylol butyric acid, 2,2-dimethylol pentanoic acid, dihydroxy succinic acid, and dimethylol propionic acid. Among them, hydroxypivalic acid or dimethylol propionic acid is preferable.

Although there is no particular limitation on the compound having a phosphoric acid group, examples thereof include acidic phosphoric acid esters, acidic phosphite esters, acidic hypophosphite esters, and particular polyether phosphonates (such as a commercially available product under the trade name of RHODAFAC (registered trademark) (Solvay Nicca, Ltd.)). Among them, acidic phosphoric acid esters are preferable.

Although there is no particular limitation on the compound having a sulfonic acid, examples thereof include sulfonic acids having a hydroxyl group and sulfonic acids having an amino group.

Examples of the sulfonic acids having a hydroxyl group include 2-hydroxyethanesulfonic acid, 3-hydroxypropanesulfonic acid, 4-hydroxybutanesulfonic acid, 5-hydroxypentanesulfonic acid, 6-hydroxyhexanesulfonic acid, hydroxybenzenesulfonic acid, hydroxy(methyl)benzenesulfonic acid, 4-(2-hydroxyethyl)-1-piperazineethanesulfonic acid, 4-(2-hydroxyethyl)-1-piperazinepropanesulfonic acid, 2-hydroxy-3-morpholinopropanesulfonic acid, and particular polyether sulfonates such as a commercially available product under the trade name of Tegomer (registered trademark) (The Goldschmidt AG, Essen, Germany).

Examples of the sulfonic acids having an amino group include 2-aminoethanesulfonic acid, 2-methylaminoethanesulfonic acid, 2-(cyclohexylamino)-ethanesulfonic acid, 3-(cyclohexylamino)-propanesulfonic acid, 4-aminotoluene-2-sulfonic acid, 5-aminotoluene-2-sulfonic acid, 2-aminonaphthalene-4-sulfonic acid, 4-aminobenzenesulfonic acid, and 3-aminobenzenesulfonic acid.

Among them, 2-hydroxyethanesulfonic acid, 3-hydroxypropanesulfonic acid, hydroxybenzenesulfonic acid, hydroxy(methyl)benzenesulfonic acid, 2-(cyclohexylamino)-ethanesulfonic acid, or 3-(cyclohexylamino)-propanesulfonic acid is preferable.

An acidic group, such as a carboxylic acid group, a phosphoric acid group, or a sulfonic acid group, of the anionic hydrophilic compound is preferably neutralized with an inorganic base or an organic amine compound.

Examples of the inorganic base include: alkali metals such as lithium, sodium, potassium, rubidium, and cesium; alkaline-earth metals such as magnesium, calcium, strontium, and barium; metals such as manganese, iron, cobalt, nickel, copper, zinc, silver, cadmium, lead, and aluminum; and ammonia.

Examples of the organic amine compound include: linear tertiary amines such as trimethylamine, triethylamine, tripropylamine, tributylamine, trioctylamine, trilaurylamine, tridecylamine, and tristearylamine; branched tertiary amines such as triisopropylamine, triisobutylamine, tri-2-ethylhexylamine, and tri-branched tridecylamine; tertiary amines having mixed hydrocarbon groups such as N,N-dimethylethylamine, N,N-dimethylpropylamine, N,N-dimethylisopropylamine, N,N-dimethylbutylamine, N,N-dimethylisobutylamine, N,N-dimethyloctylamine, N,N-dimethyl-2-ethylhexylamine, N,N-dimethyllaurylamine, N,N-dimethyl(branched)tridecylamine, N,N-dimethylstearylamine, N,N-diethylbutylamine, N,N-diethylhexylamine, N,N-diethyloctylamine, N,N-diethyl-2-ethylhexylamine, N,N-diethyllaurylamine, N,N-diisopropylmethylamine, N,N-diisopropylethylamine, N,N-diisopropylbutylamine, and N,N-diisopropyl-2-ethylhexylamine; alicyclic tertiary amines such as N,N-dimethylcyclohexylamine, N,N-diethylbenzylamine, N,N-diethylcyclohexylamine, N,N-dicyclohexylmethylamine, N,N-dicyclohexylethylamine, and tricyclohexylamine; tertiary amines having an aromatic substituent such as N,N-dimethylbenzylamine, N,N-diethylbenzylamine, N,N-dibenzylmethylamine, tribenzylamine, N,N-dimethyl-4-methylbenzylamine, N,N-dimethylphenylamine, N,N-diethylphenylamine, and N,N-diphenylmethylamine; cyclic amines such as N-methylpyrrolidine, N-ethylpyrrolidine, N-propylpyrrolidine, N-butylpyrrolidine, N-methylpiperidine, N-ethylpiperidine, N-propylpiperidine, N-butylpiperidine, N-methylmorpholine, N-ethylmorpholine, N-propylmorpholine, N-butylmorpholine, N-sec-butylmorpholine, N-tert-butylmorpholine, N-isobutylmorpholine, and quinuclidine; and mixtures thereof.

Among them, tertiary amines having a total carbon number of 5 to 30 are preferable, and specific examples thereof include triethylamine, tripropylamine, tributylamine, trioctylamine, trilaurylamine, tridecylamine, triisopropylamine, triisobutylamine, tri-2-ethylhexylamine, tri-branched tridecylamine, N,N-dimethylpropylamine, N,N-dimethylisopropylamine, N,N-dimethylbutylamine, N,N-dimethylisobutylamine, N,N-dimethyloctylamine, N,N-dimethyl-2-ethylhexylamine, N,N-dimethyllaurylamine, N,N-dimethyl(branched)tridecylamine, N,N-dimethylstearylamine, N,N-diethylbutylamine, N,N-diethylhexylamine, N,N-diethyloctylamine, N,N-diethyl-2-ethylhexylamine, N,N-diethyllaurylamine, N,N-diisopropylmethylamine, N,N-diisopropylethylamine, N,N-dimethylcyclohexylamine, N,N-diethylcyclohexylamine, N,N-dicyclohexylmethylamine, N,N-dicyclohexylethylamine, N,N-dimethylbenzylamine, N,N-diethylbenzylamine, N,N-dibenzylmethylamine, tribenzylamine, N,N-dimethylphenylamine, N,N-diethylphenylamine, N,N-diphenylmethylamine, N-methylpiperidine, N-ethylpiperidine, N-methylmorpholine, N-ethylmorpholine, quinuclidine, pyridine, and quinolone, and mixtures thereof.

Although the blocked isocyanate composition is modified with the hydrophilic compound (C) so as to make the blocked isocyanate composition be dispersed in water, deterioration in physical properties (such as hardness, chemical resistance, water resistance, and impact resistance) of the resultant coating film tends to be suppressed by controlling the modification rate not to be excessively high. Since the anionic hydrophilic compound has a high emulsifying capacity, the anionic hydrophilic compound can exhibit a high emulsifying effect even at a small amount.

The amount of sulfur atom relative to the total mass (100% by mass) of the blocked isocyanate composition is preferably 0.03% by mass or more, more preferably 0.05% by mass or more, and even more preferably 0.08% by mass or more, from the viewpoint of the dispersibility in water. In contrast, the amount of sulfur atom relative to the total mass (100% by mass) of the blocked isocyanate composition is preferably 3.0% by mass or less, more preferably 2.5% by mass or less, and even more preferably 2.0% by mass or less, from the viewpoint of the physical properties of the resultant coating film.

When the amount of sulfur atom is the above-mentioned lower limit or more, the surface tension tends to decrease, thereby further improving dispersibility in water. In contrast, when the amount of sulfur atom is the above-mentioned upper limit or less, the physical properties of the resultant coating film tend to be further improved due to an increase in the amount of isocyanate groups to be used in crosslinking.

Although the method of controlling the amount of sulfur atom to be within the above-mentioned range is not limited to the following method, examples thereof include a method in which the blend ratio of the compound having a sulfonic acid group to the triisocyanate compound (A) is adjusted.

The amount of sulfur atom can be measured by ion chromatography (IC) or the like, for example.

### (Cationic hydrophilic compound)

Although there is no particular limitation on the cationic hydrophilic compound, examples thereof include: amine compounds having a hydroxy group, such as dimethylethanolamine, diethylethanolamine, diethanolamine, methyldiethanolamine, N,N-dimethylaminohexanol, N,N-dimethylaminoethoxyethanol, N,N-dimethylaminoethoxyethoxyethanol, N,N,N'-trimethylaminoethylethanolamine, and N-methyl-N-(dimethylaminopropyl)aminoethanol. A tertiary amino group (cationic hydrophilic group) which is introduced into an isocyanate group may be quaternized with dimethyl sulfate or diethyl sulfate. Among them, the cationic hydrophilic compound is preferably dimethylethanolamine, diethylethanolamine, N,N-dimethylaminohexanol, N,N-dimethylaminoethoxyethanol, or N,N-dimethylaminoethoxyethoxyethanol.

The tertiary amino group of the cationic hydrophilic compound is preferably neutralized with a compound having an anionic group. Although an anionic group thereof is not particularly limited, examples thereof include a carboxy group, a sulfonic acid group, a phosphoric acid group, halogen groups, and a sulfuric acid group

Although the compound having a carboxyl group is not particularly limited, examples thereof include formic acid, acetic acid, propionic acid, butyric acid, and lactic acid.

Although the compound having a sulfone group is not particularly limited, examples thereof include ethanesulfonic acid.

Although the compound having a phosphoric acid group is not particularly limited, examples thereof include phosphoric acid and acidic phosphoric acid esters.

Although the compound having a halogen group is not particularly limited, examples thereof include hydrochloric acid.

Although the compound having a sulfuric acid group is not particularly limited, examples thereof include sulfuric acid.

Among them, the compound having an anionic group is preferably the compound having a carboxyl group, and more preferably acetic acid, propionic acid, or butyric acid.

### [Blocking agent (D)]

Examples of the blocking agent (D) include: (1) pyrazole-based compounds; (2) amine-based compounds; (3) active methylene-based compounds; (4) oxime-based compounds; (5) alcohol-based compounds; (6) alkylphenol-based compounds; (7) phenol-based compounds; (8) mercaptan-based compounds; (9) acidic amide-based compounds; (10) acidic imide-based compounds; (11) imidazole-based compounds; (12) urea-based compounds; (13) imine-based compounds; (14) bisulfites; and (15) triazole-based compounds. Specific examples of the blocking agent (D) include the following compounds.
(1) Pyrazole-based compounds: pyrazole, 3-methylpyrazole, 3,5-dimethylpyrazole, and the like.
(2) Amine-based compounds: diphenylamine, aniline, carbazole, di-n-propylamine, diisopropylamine, isopropylethylamine, tert-butylbenzylamine, and the like.
(3) Active methylene-based compounds: dimethyl malonate, diethyl malonate, diisopropyl malonate, di-tert-butyl malonate, methyl acetoacetate, ethyl acetoacetate, acetylacetone, and the like.
(4) Oxime-based compounds: formaldoxime, acetoaldoxime, acetoxime, methylethylketoxime, cyclohexanone oxime, and the like.
(5) Alcohol-based compounds: alcohols such as methanol, ethanol, 2-propanol, n-butanol, sec-butanol, 2-ethyl-1-hexanol, 2-methoxyethanol, 2-ethoxyethanol, 2-butoxyethanol, and the like.
(6) Alkylphenol-based compounds: mono- and di-alkylphenols having an alkyl group having 4 or more carbon atoms as a substituent. Specific examples of the alkylphenol-based compounds include: monoalkylphenols such as n-propylphenol, iso-propylphenol, n-butylphenol, sec-butylphenol, t-butylphenol, n-hexylphenol, 2-ethylhexylphenol, n-octylphenol, and n-nonylphenol; and dialkylphenols such as di-n-propylphenol, diisopropylphenol, isopropylcresol, di-n-butylphenol, di-t-butylphenol, di-sec-butylphenol, di-n-octylphenol, di-2-ethylhexylphenol, di-n-nonylphenol, and the like.
(7) Phenol-based compounds: phenol, cresol, ethylphenol, styrenated phenol, hydroxybenzoic acid ester, and the like.
(8) Mercaptan-based compounds: butylmercaptan, dodecylmercaptan, and the like.
(9) Acidic amide-based compounds: acetanilide, amide acetate, ε-caprolactam, δ-valerolactam, γ-butyrolactam, and the like.
(10) Acidic imide-based compounds: succinimide, maleimide, and the like.
(11) Imidazole-based compounds: imidazole, 2-methylimidazole, and the like.
(12) Urea-based compounds: urea, thiourea, ethyleneurea, and the like.
(13) Imine-based compounds: ethyleneimine, polyethyleneimine, and the like.
(14) Bisulfites: sodium bisulfite, and the like.
(15) Triazole-based compounds: 3,5-dimethyl-1,2,4-triazole, and the like.

Among them, the blocking agent (D) preferably contains at least one selected from the group consisting of oxime-based compounds, acidic amide-based compounds, amine-based compounds, active methylene-based compounds, and pyrazole-based compounds, is more preferably at least one compound selected from the group consisting of oxime-based compounds, amine-based compounds, and pyrazole-based compounds, and is even more preferably methylethylketoxime, diisopropylamine, or 3,5-dimethylpyrazole, from the viewpoint of ease of industrial availability, as well as the viscosity of the resultant blocked isocyanate composition, the reaction temperature and the reaction time, and is particularly preferably 3,5-dimethylpyrazole from the viewpoint of the realization of both the low-temperature curability and the compatibility with polyol.

One of the blocking agent (D) may be used alone or at least two thereof may be used in combination.

In the blocked isocyanate composition of the present embodiment, the amount of the structural unit formed from the blocking agent (D) relative to the mass of the blocked isocyanate may be 1.0% by mass to less than 50.0% by mass, 10.0% by mass to 40.0% by mass, or 15.0% by mass to 30.0% by mass.

Although the method of controlling the amount of the structural unit formed from the blocking agent (D) to be within the above-mentioned range is not limited to the following method, examples thereof include a method in which the blend ratio of the blocking agent (D) to the triisocyanate compound (A) is adjusted.

The structural unit formed from the blocking agent (D) has a structure in which a group which reacts with an isocyanate group of the triisocyanate compound (A) is removed from the blocking agent (D).

The amount of the structural unit formed from the blocking agent (D) relative to the mass of the blocked isocyanate is measured by pyrolysis gas chromatography, for example.

### [Other compounds]

The blocked isocyanate composition of the present embodiment may contain at least one compound selected from the group consisting of compounds having an unsaturated bond, inactive compounds, metal atoms, basic amino compounds, and carbon dioxide in an amount of 1.0 ppm by mass to 1.0×10⁴ ppm by mass relative to the mass of the triisocyanate compound (A). The presence of these can prevent coloration during long-term storage, and improve long-term storage stability. The amount of these compounds relative to the mass of the triisocyanate compound (A) is generally 1.0 ppm by mass or more, preferably 3.0 ppm by mass or more, more preferably 5.0 ppm by mass or more, and even more preferably 10 ppm by mass or more. In contrast, the amount of these compounds is generally 1.0×10⁴ ppm by mass or less, preferably 5.0×10³ ppm by mass or less, more preferably 3.0×10³ ppm by mass or less, and even more preferably 1.0×10³ ppm by mass or less.

The compound having an unsaturated bond preferably has an unsaturated bond between carbons, between carbon and nitrogen, or between carbon and oxygen. From the viewpoint of the stability of the compound, the unsaturated bond is preferably a double bond, and more preferably a double bond between carbons (C=C) or between carbon and oxygen (C=O). Carbon atoms constituting the compound preferably bond with at least three atoms.

Although there is a general case in which a double bond between carbons constitutes an aromatic ring, the unsaturated bond in the compound having an unsaturated bond does not contain any double bonds between carbons which constitute an aromatic ring.

Examples of the compound having a double bond between carbon and oxygen include carbonic acid derivatives. Examples of the carbonic acid derivatives include urea compounds, carbonic acid esters, N-unsubstituted carbamic acid esters, and N-substituted carbamic acid esters.

The inactive compounds are classified into the following Compounds a to g.

Hydrocarbon compounds are classified into Compound a and Compound b; ether compounds and sulfide compounds are classified into the following Compounds c to e; halogenated hydrocarbon compounds are classified into the following Compound f; silicon-containing hydrocarbon compounds, silicon-containing ether compounds and silicon-containing sulfide compounds are classified into the following Compound g. The Compounds a to g mentioned here do not contain any unsaturated bonds other than aromatic rings, and the above-mentioned compounds having an unsaturated bond do not belong thereto.

Compounds a: linear, branched or cyclic aliphatic hydrocarbon compounds.

Compounds b: aromatic hydrocarbon compounds which may be substituted with an aliphatic hydrocarbon group.

Compounds c: compounds having either an ether bond or a sulfide bond, and aliphatic hydrocarbon groups in which the same kind or different kinds of aliphatic hydrocarbon compound are bonded together through the ether bond or the sulfide bond.

Compounds d: compounds having either an ether bond or a sulfide bond, and aromatic hydrocarbon groups in which the same kind or different kinds of aromatic hydrocarbon group are bonded together through the ether bond or the sulfide bond.

Compounds e: compounds having either an ether bond or a sulfide bond, and both an aliphatic hydrocarbon group and an aromatic hydrocarbon group.

Compounds f: halides in which at least one hydrogen atom constituting an aliphatic hydrocarbon compound, or at least one hydrogen atom constituting an aromatic hydrocarbon compound is substituted with a halogen atom.

Compounds g: compounds in which carbon atoms of the Compounds a to f are partially or entirely substituted with silicon atoms.

The metal atom may be present as a metal ion or as a metal element. As the metal atom, one metal atom may be used or plural metal atoms may be used in combination. The metal atom is preferably a divalent to tetravalent metal atom, and, among them, at least one metal selected from the group consisting of iron, cobalt, nickel, zinc, tin, copper, and titanium is more preferable.

The basic amino compound is an ammonia derivative such as a compound (primary) in which one hydrogen atom is substituted with an alkyl group or an aryl group; a compound (secondary) in which two hydrogen atoms are substituted with alkyl groups and/or aryl groups; or a compound (tertiary) in which three hydrogen atoms are substituted with alkyl groups and/or aryl groups. Among them, the basic amino compound is preferably a secondary or tertiary amino compound, and more preferably an aliphatic amine, an aromatic amine, a heterocyclic amine, or a basic amino acid.

The carbon dioxide may be dissolved in isocyanate under ordinary pressure or may be stored under increased pressure in a pressure vessel. The moisture amount in the carbon dioxide is preferably controlled, as needed, because there is a case in which the use of carbon dioxide containing moisture causes hydrolysis of isocyanate.

The amount of halogen atoms in the blocked isocyanate composition is preferably 1.0×10² ppm by mass or less from the viewpoint of prevention of coloration. Although the halogen atom is not particularly limited, the halogen atom is preferably at least one selected from the group consisting of chlorine and bromine, and more preferably at least one ion or compound selected from the group consisting of a chlorine ion, a bromine ion, hydrolysable chlorine and hydrolysable bromine. Examples of the hydrolysable chlorine include a carbamoyl chloride compound in which a hydrogen chloride is added to an isocyanate group. Examples of the hydrolysable bromine include a carbamoyl bromide compound in which a hydrogen bromide is added to an isocyanate group.

### <Method of producing the blocked isocyanate composition>

A method of producing the blocked isocyanate composition of the present embodiment includes a step in which the triisocyanate compound (A), the diol compound (B), the hydrophilic compound (C) and the blocking agent (D) are reacted.

In the method of producing the blocked isocyanate composition of the present embodiment, the blended amount of the diol compound (B) relative to the blended amount of the triisocyanate compound (A) (100 parts by mass) is, for example, preferably 5 parts by mass or more, more preferably 10 parts by mass or more, and even more preferably 40 parts by mass or more. In contrast, the blended amount of the diol compound (B) relative to the blended amount of the triisocyanate compound (A) is, for example, preferably 400 parts by mass or less, more preferably 300 parts by mass or less, and even more preferably 190 parts by mass or less.

The blended amount of the diol compound (B) relative to the blended amount of the triisocyanate compound (A) (100 parts by mass) is, for example, preferably 5 parts by mass to 400 parts by mass, more preferably 10 parts by mass to 300 parts by mass, and even more preferably 40 parts by mass to 190 parts by mass.

The particle size stability of an aqueous dispersion during storage and the impact resistance or the chemical resistance of a resultant coating film are further improved by making the blended amount of the diol compound (B) be within the above-mentioned range.

In the method of producing the blocked isocyanate composition of the present embodiment, the blended amount of the hydrophilic compound (C) relative to the blended amount of the triisocyanate compound (A) (100 parts by mass) is, for example, preferably 15 parts by mass or more, more preferably 42 parts by mass or more, and even more preferably 60 parts by mass or more. In contrast, the blended amount of the hydrophilic compound (C) relative to the blended amount of the triisocyanate compound (A) is, for example, preferably 240 parts by mass or less, more preferably 210 parts by mass or less, and even more preferably 160 parts by mass or less.

The blended amount of the hydrophilic compound (C) relative to the blended amount of the triisocyanate compound (A) (100 parts by mass) is, for example, preferably 15 parts by mass to 240 parts by mass, more preferably 42 parts by mass to 210 parts by mass, and even more preferably 60 parts by mass to 160 parts by mass.

The particle size stability of an aqueous dispersion during storage and the adhesion to a substrate, the impact resistance, and the chemical resistance of a resulting coating film are further improved by making the blended amount of the hydrophilic compound (C) be within the above-mentioned range.

**In** the method of producing the blocked isocyanate composition of the present embodiment, the blended amount of the blocking agent (D) relative to the blended amount of the triisocyanate compound (A) (100 parts by mass) is, for example, preferably 15 parts by mass or more, more preferably 30 parts by mass or more, and even more preferably 75 parts by mass or more. **In** contrast, the blended amount of the blocking agent (D) relative to the blended amount of the triisocyanate compound (A) is, for example, preferably 99 parts by mass or less, more preferably 95 parts by mass or less, and even more preferably 90 parts by mass or less.

The blended amount of the blocking agent (D) relative to the blended amount of the triisocyanate compound (A) (100 parts by mass) is, for example, preferably 15 parts by mass to 110 parts by mass, more preferably 30 parts by mass to 95 parts by mass, and even more preferably 75 parts by mass to 90 parts by mass.

The particle size stability of an aqueous dispersion during storage and the adhesion to a substrate, the impact resistance, and the chemical resistance of a resultant coating film are further improved by making the blended amount of the blocking agent (D) be within the above-mentioned range.

The reaction temperature at the reaction step is preferably -20°C to 150°C, and more preferably 30°C to 120°C, from the viewpoint of suppression of side-reaction and the production efficiency. In addition, an organic salt of a metal such as tin, zinc, or lead; a tertiary amine-based compound; an alcoholate of an alkali metal such as sodium may be used as a catalyst at the reaction.

The blocking agent (D) may be added after the reaction of the triisocyanate compound (A), the diol compound (B) and the hydrophilic compound (C) or during the reaction, or may be added together with the diol compound (B) and the hydrophilic compound (C) when the reaction is started. Alternatively, the blocking agent (D) may be added before the reaction is started to be reacted with some of the isocyanate groups of the triisocyanate compound (A), followed by reacting the resultant with the diol compound (B) and the hydrophilic compound (C).

**In** the case where the blocking agent (D) is added after the reaction of the triisocyanate compound (A), the diol compound (B) and the hydrophilic compound (C) at the reaction step, isocyanate groups of the triisocyanate compound (A) which are unreacted with the diol compound (B) and the hydrophilic compound (C) may be partially or entirely blocked, but it is preferable that the isocyanate groups of the triisocyanate compound (A) which are unreacted with the diol compound (B) and the hydrophilic compound (C) be entirely blocked. In the case where the isocyanate groups are entirely blocked, the ratio of the molar amount of the blocking agent (D) relative to the functional group number (molar amount) of isocyanate groups of the triisocyanate compound (A) which are unreacted with the diol compound (B) and the hydrophilic compound (C) ((the molar amount of the blocking agent) / the functional group number (molar amount) of the isocyanate groups)) is preferably 1.0 to 1.5, more preferably 1.0 to 1.3, and even more preferably 1.0 to 1.2. In this case, excessive or unreacted blocking agent (D) remains in the blocked isocyanate composition.

It is preferable that the hydrophilic compound (C) be entirely reacted with the triisocyanate compound (A) such that the hydrophilic compound (C) remains in an unreactive state. Thus, the water-dispersible stability of the blocked isocyanate composition and the curability when made into a coating film tend to be further improved.

In the reaction step, the reaction may be allowed to proceed in the absence of solvents or in an organic solvent which does not have reactivity with the compound having isocyanate groups, as needed. Although such an organic solvent is not particularly limited, examples thereof include: aliphatic hydrocarbon-based solvents such as hexane, heptane, and octane; alicyclic hydrocarbon-based solvents such as cyclohexane, and methylcyclohexane; ketone-based solvents such as acetone, methylethylketone, methylisobutylketone, and cyclohexanone; ester-based solvents such as methyl acetate, ethyl acetate, butyl acetate, isobutyl acetate, methyl lactate, and ethyl lactate; aromatic solvents such as toluene, xylene, diethylbenzene, mesitylene, anisole, benzyl alcohol, phenyl glycol, and chlorobenzene; glycol-based solvents such as ethylene glycol monoethyl ether acetate, 3-methyl-3-methoxybutylacetate, dipropylene glycol monomethyl ether, and propylene glycol monomethyl ether; ether-based solvents such as diethyl ether, tetrahydrofuran, and dioxane; halogenated hydrocarbon-based solvents such as dichloromethane, 1,2-dichloroethane, and chloroform; pyrolidone-based solvents such as N-methyl-2-pyrolidone; amide-based solvents such as N,N-dimethylacetamide, and N,N-dimethylformamide; sulfoxide-based solvent such as dimethyl sulfoxide; lactone-based solvents such as γ-butyrolactone; amine-based solvents such as morpholine; and mixtures thereof. One of these solvents may be used alone or at least two thereof may be used in combination. The organic solvent may be removed after the reaction.

### <Physical properties of the blocked isocyanate composition>

Although the calculated amount ratio of isocyanate groups in the blocked isocyanate composition (calculated NCO amount ratio) is not particularly limited in the blocked isocyanate composition of the present embodiment, the calculated NCO amount ratio is preferably 5.0% by mass to 25.0% by mass, and more preferably 8.0% by mass to 20.0% by mass.

The physical properties, such as hardness, of a resultant coating film are further improved by making the calculated NCO amount ratio be the above-mentioned lower limit or more. In contrast, the yield of the blocked isocyanate composition is further enhanced by making the calculated NCO amount ratio be the above-mentioned upper limit or less.

The term "calculated isocyanate group (NCO) amount ratio" used herein refers to a calculated value of the ratio of isocyanate groups of a feedstock isocyanate compound such as the triisocyanate compound (A) relative to the solid mass of the blocked isocyanate composition after the blocking reaction, and is indicated by % by mass of isocyanate groups.

The calculated NCO amount ratio can be calculated using the method described **in** Examples below.

### <<Aqueous dispersion>>

An aqueous dispersion of the present embodiment contains: the above-mentioned blocked isocyanate composition; and water.

The blocked isocyanate composition can be made into an aqueous dispersion by being dispersed in water.

The aqueous dispersion of the present embodiment makes it possible to stabilize the particle size during storage and the adhesion of a coating film to a substrate when the aqueous dispersion is made into a coating film due to the above-mentioned constitution.

In the aqueous dispersion of the present embodiment, the average dispersed particle size of the blocked isocyanate composition may be 1 nm to 100 µm, and is preferably 10 nm to 500 nm, more preferably 10 nm to 200 nm, even more preferably 10 nm to 100 nm, and particularly preferably 10 nm to 50 nm. The water-dispersible stability, the particle size stability during storage and the water resistance of a resultant coating film are further improved by making the average dispersed particle size of the blocked isocyanate composition be within the above-mentioned range.

The average dispersed particle size is the volume-average particle size (Mean Volume Diameter) of the blocked isocyanate composition dispersed in water, and can be determined by the method described in Examples below.

### <<Coating composition>>

A coating composition of the present embodiment contains: the above-mentioned blocked isocyanate composition; and a polyol.

The above-mentioned blocked isocyanate composition is suitably used as a curing agent of a coating composition or the like.

The coating composition of the present embodiment makes it possible to realize excellent chemical resistance and impact resistance when made into a coating film due to the above-mentioned constitution.

Specific examples of the polyol include polyester polyols, polyether polyols, acrylic polyols, polyolefin polyols, and fluorinated polyol.

The coating composition of the present embodiment is preferably water-based.

The polyester polyols may be obtained by a condensation reaction of one of or a mixture of dibasic acids, such as succinic acid, adipic acid, dimer acid, maleic anhydride, phthalic anhydride, isophthalic acid, terephthalic acid, and 1,4-cyclohexanedicarboxylic acid, with one of or a mixture of polyvalent alcohols, such as ethylene glycol, propylene glycol, diethylene glycol, 1,4-butanediol, neopentyl glycol, 1,6-hexanediol, trimethylpentanediol, cyclohexanediol, trimethylolpropane, glycerol, pentaerythritol, 2-methylol propanediol, and ethoxylated trimethylolpropane, for example. The above-mentioned components are heated together at about 160°C to 220°C to allow the condensation reaction to proceed, for example.

In addition, a polycaprolactone obtained by a ring-opening polymerization of a lactone such as ε-caprolactone using a polyvalent alcohol may be used as a polyester polyol.

These polyester polyols may be modified with an aromatic diisocyanate, an aliphatic diisocyanate, an alicyclic diisocyanate, or a polyisocyanate formed therefrom. Among them, the polyester polyol is preferably modified with an aliphatic diisocyanate, an alicyclic diisocyanate, or a polyisocyanate formed therefrom from the viewpoint of the weather resistance and the yellowing resistance. When used in a water-based coating material, some of the carboxylic acids such as dibasic acids remain to be neutralized with a base such as amine or ammonia, thereby obtaining a water-soluble or water-dispersible resin.

Examples of the polyether polyols include: polyether polyols obtained by a random or block addition of one of or a mixture of alkylene oxides (such as ethylene oxide, propylene oxide, butylene oxide, cyclohexene oxide, and styrene oxide) to one of or a mixture of polyvalent hydroxy compounds using a catalyst such as a hydroxide (such as a hydroxide of alkali metal such as lithium, sodium, or potassium), a strongly basic catalyst (such as an alcoholate or an alkyl amine), or a composite metal cyanide complex (such as metalloporphyrin, or zinc hexacyanocobaltate complex); polyether polyols obtained by reacting an alkylene oxide with a polyamine compound (such as ethylene diamine); and polymer polyols obtained by polymerizing acrylamide or the like using these polyether polyol as a medium.

Examples of the polyvalent hydroxy compound include: (1) diglycerol, ditrimethylolpropane, pentaerythritol, and dipentaerythritol; (II) sugar alcohol-based compounds such as erythritol, D-traitol, L-arabinitol, ribitol, xylitol, sorbitol, mannitol, galactitol, and ramnitol; (III) monosaccharides such as arabinose, ribose, xylose, glucose, mannose, galactose, fructose, sorbose, rhamnose, fucose, and ribodesose; (iv) disaccharides such as trehalose, sucrose, maltose, cellobiose, gentiobiose, lactose, and melibiose; (v) trisaccharides such as raffinose, gentianose, and melicitose; and (vi) tetrasaccharides such as stachyose.

An acrylic polyol may be obtained by solely polymerizing polymerizable monomers having at least one active hydrogen per molecule or by copolymerizing polymerizable monomers having at least one active hydrogen per molecule with other monomers copolymerizable with the polymerizable monomers.

Examples of the polymerizable monomers having active hydrogen include the following compounds:
(i) acrylic acid esters having active hydrogen such as 2-hydroxyethyl acrylate, 2-hydroxypropyl acrylate, and 2-hydroxybutyl acrylate;
(ii) methacrylic acid esters having active hydrogen such as 2-hydroxyethyl methacrylate, 2-hydroxypropyl methacrylate, 2-hydroxybutyl methacrylate, 3-hydroxypropyl methacrylate, and 4-hydroxybutyl methacrylate;
(iii) (meth)acrylic acid esters having polyvalent active hydrogen such as (meth)acrylic acid monoesters of triols such as glycerol or trimethylolpropane;
(iv) monoethers of polyether polyols such as polyethylene glycol, polypropylene glycol, or polybutylene glycol, with the above-mentioned (meth)acrylic acid esters having active hydrogen;
(v) adducts of glycidyl (meth)acrylate and monobasic acids such as acetic acid, propionic acid or p-tert-butylbenzoic acid; and
(vi) adducts obtained by a ring-opening polymerization of lactones such as ε-caprolactam or γ-valerolactone to the above-mentioned (meth)acrylic acid esters having active hydrogen.

Examples of other monomers copolymerizable with the polymerizable monomers having active hydrogen include the following compounds:
(i) (meth)acrylic acid esters such as methyl acrylate, ethyl acrylate, isopropyl acrylate, n-butyl acrylate, 2-ethylhexyl acrylate, methyl methacrylate, ethyl methacrylate, isopropyl methacrylate, n-butyl methacrylate, isobutyl methacrylate, n-hexyl methacrylate, cyclohexyl methacrylate, lauryl methacrylate, and glycidyl methacrylate;
(ii) unsaturated carboxylic acids such as acrylic acid, methacrylic acid, maleic acid, and itaconic acid;
(iii) unsaturated amides such as acrylamide, N-methylolacrylamide, and diacetone acrylamide;
(iv) vinyl monomers having a hydrolyzable silyl group such as vinyltrimethoxysilane, vinylmethyldimethoxysilane, γ-(meth)acrylopropyltrimethoxysilane; and
(v) other polymerizable monomers such as styrene, vinyl toluene, vinyl acetate, acrylonitrile, and dibutyl fumarate.

The acrylic polyol can be obtained, for example, by subjecting the above-mentioned monomer components to a solution polymerization in the presence of a radical polymerization initiator such as a conventionally-known peroxide or azo compound, followed by diluting the resultant with an organic solvent or the like, as needed.

A water-based acrylic polyol is obtained by subjecting an olefinic unsaturated compound to solution polymerization, followed by conducting a method that allows the resultant to convert to an aqueous phase or a conventionally-known method, such as emulsion polymerization. In this case, an acidic moiety of a monomer containing a carboxylic acid such as an acrylic acid or a methacrylic acid or a monomer containing a sulfonic acid may be neutralized with an amine or ammonia to impart water-solubility or dispersibility in water.

The fluorinated polyol is a polyol containing fluorine in a molecule thereof, and examples thereof include: fluoroolefins such as those disclosed in Japanese Unexamined Patent Application Publication No. Sho 57-34107 (Reference document 5) and Japanese Unexamined Patent Application Publication No. Sho 61-275311 (Reference document 6); and copolymers of cyclovinyl ethers, hydroxyalkylvinyl ethers, or vinyl monocarboxylates.

The hydroxyl value of the polyol is not particularly limited, and is preferably 10 mgKOH/g or more, more preferably 20 mgKOH/g or more, and even more preferably 30 mgKOH/g or more. In contrast, the hydroxyl value of the polyol is preferably 200 mgKOH/g or less.

The acid value of the polyol is preferably 0 mgKOH/g to 30 mgKOH/g.

The hydroxyl value and the acid value can be measured in accordance with JIS K1557.

The molar equivalent ratio (NCO/OH) of isocyanate groups in the blocked isocyanate composition relative to hydroxy groups in the polyol is preferably 0.2 to 5.0, more preferably 0.4 to 3.0, and even more preferably 0.5 to 2.0. A coating film having a further improved toughness can be formed by making the ratio of NCO/OH be the above-mentioned lower limit or more. In contrast, the smoothness of a resultant coating film can be further improved by making the ratio of NCO/OH be the above-mentioned upper limit or less.

### <Other components>

The coating composition of the present embodiment may further contain a melamine-based curing agent such as a perfect alkyl type, methylol type alkyl, or imino group type alkyl, as needed.

The blocked isocyanate composition, the compound having at least two active hydrogens in a molecule thereof, and the coating composition of the present embodiment may be mixed with an organic solvent to be used. The organic solvent is preferably free from any functional groups which react with a hydroxy group and an isocyanate group. The organic solvent is preferably compatible with the blocked isocyanate composition. Examples of such an organic solvent include ester compounds, ether compounds, ketone compounds, aromatic compounds, ethylene glycol dialkyl ether-based compounds, polyethylene glycol dicarboxylate-based compounds, hydrocarbon-based solvents, and aromatic solvents, which are generally used as coating solvents.

The blocked isocyanate composition, the compound having at least two active hydrogens in a molecule thereof, and the coating composition of the present embodiment may be used by being mixed with various additives used in the art, such as a curing promoting catalyst, a pigment, a leveling agent, an antioxidant, an ultraviolet absorber, a photostabilizer, a plasticizer, or a surfactant, depending on the object or the application purpose thereof, within the range in which the desired effects of the present embodiment are not impaired.

Examples of the curing promoting catalyst include: metal salts such as dibutyltin dilaurate, tin 2-ethylhexanoate, zinc 2-ethylhexanoate, and cobalt salts; and tertiary amines such as triethylamine, pyridine, methylpyridine, benzyl dimethylamine, N,N-dimethylcyclohexylamine, N-methylpiperidine, pentamethyl diethylene triamine, N,N'-endoethylenepiperazine, and N,N'-dimethylpiperazine.

### <Method of producing the coating composition>

In the case where a water-based coating composition is prepared, various additives are added to an aqueous dispersion or an aqueous solution of the main agent containing a compound having at least two active hydrogens in a molecule thereof, as needed, followed by adding an aqueous dispersion of the above-mentioned blocked polyisocyanate composition to the resultant as a curing agent, further adding water or a solvent thereto, as needed, and then vigorously stirring the resultant using a stirrer to obtain a water-based coating composition.

In the case where a solvent-based coating composition is prepared, various additives are added to the main agent component containing the compound having at least two active hydrogens in a molecule thereof or a solvent dilution thereof, as needed. Then, the above-mentioned blocked polyisocyanate composition is added to the resultant as a curing agent, followed by further adding a solvent thereto, as needed, to adjust the viscosity of the resultant. Then, the resultant is stirred by hand or using a stirrer such as a mazelar to obtain a solvent-based coating composition.

### <Use of the coating composition>

The coating composition of the present embodiment is favorably used in an automobile coating material, an architectural exterior coating material, a fiber treatment agent, a tackifier, a heat release agent, a film coating agent, or the like, for example.

The coating composition of the present embodiment may be used as a coating material of a roll coating, a curtain flow coating, a spray coating, a bell coating, an electrostatic coating, or the like. The coating composition of the present embodiment is useful as a primer, intermediate or upper coating material against a material such as metal (such as a steel plate or surface-treated steel plate), plastic, wood, film, an inorganic material, or the like. The coating composition of the present embodiment is also useful as a coating material which imparts an aesthetically pleasing appearance, weather resistance, acid resistance, rust resistance, chipping resistance, or the like, to a precoat metal such as an anti-rust steel plate, an automobile coating, or the like. The coating composition of the present embodiment is also useful as a urethane feedstock of an adhesive agent, tackifier, elastomer, foam, surface-treating agent, or the like.

### <<Coating film>>

A coating film of the present embodiment is formed by curing the above-mentioned coating composition, and has excellent chemical resistance and impact resistance.

The coating film of the present embodiment is formed by coating the above-mentioned coating composition using a conventionally-known method such as roll coating, curtain flow coating, spray coating, bell coating, electrostatic coating or the like, followed by drying at ordinary temperature or conducting a baking step to cure the coating composition.

### [Examples]

Hereinafter, the present embodiment will be described further specifically with reference to specific Examples and Comparative Examples, but the present embodiment is not limited to the following Examples and Comparative Examples as long as the gist thereof is not exceeded.

Physical properties of each isocyanate composition in Examples and Comparative Examples were measured as mentioned below. The terms "part" and "%" indicate "part by mass" and "% by mass" respectively, unless particularly mentioned.

### <Method of measuring physical properties>

### [Physical property 1]

### (Calculated NCO amount ratio)

The NCO amount ratio (% by mass) of a triisocyanate compound (A) was determined by neutralizing isocyanate groups in a measurement sample with an excessive 2N amine, followed by subjecting the resultant to a back titration with 1N hydrochloric acid. The NCO amount [A] (parts by mass) in the triisocyanate compound (A) was determined from the resultant NCO amount ratio (% by mass) and the mass (parts by mass) of the charged triisocyanate compound (A).

Then, the calculated NCO amount ratio was determined using the following equation [1]. Calculated NCO amount ratio (% by mass) = 100 × [A]/(the solid mass of a blocked isocyanate composition)

### [Physical property 2]

### (Polymerization degree n31 of hydrophilic compound (C))

The polymerization degree (the average number of repeating units of alkylene glycol) n31 of a hydrophilic compound (C) was determined by proton nuclear magnetic resonance (NMR) analysis using a blocked isocyanate composition as a sample, and the following device and conditions. The average number n31 of repeating units of alkylene glycol in a blocked isocyanate composition was determined by correlating an integrated value of relative intensity corresponding to an alkylene group to an integrated value of relative intensity corresponding to an alkyl group.

### (Measurement device and conditions)

NMR device: Bruker Biospin Avance 600 (trade name)
Measured nucleus: ¹H
Resonance frequency: 600 MHz
Solvent: CDCl₃
Cumulated number: 256

### [Physical property 3]

### (Average dispersed particle size of a blocked isocyanate composition in an aqueous dispersion)

The average dispersed particle size was determined by measuring the volume-average particle size of an aqueous dispersion of a blocked isocyanate composition using the following device and conditions.

### (Measurement device and conditions)

Device: Nanotrac UPA-EX150 (manufactured by NIKKISO CO., LTD.)
Solvent: water
Temperature: 23°C

### <Evaluation method>

### [Evaluation 1]

### (External appearance of an aqueous dispersion)

An external appearance of an aqueous dispersion of a blocked isocyanate composition was observed visually from immediately after water and the blocked isocyanate composition were mixed until a lapse of one hour. The case in which separation did not occur during observation was evaluated as ∘, whilst the case in which separation occurred during observation was evaluated as ×.

### [Evaluation 2]

### (Particle size stability during storage)

An aqueous dispersion of a blocked isocyanate composition was stored at 35°C for 30 days to evaluate the change in the average dispersed particle size between before and after storage. The average dispersed particle size was measured by the method described in the section "Physical property 3".

The ratio of the average dispersed particle size after storage / the average dispersed particle size before storage was calculated and the particle size stability during storage was evaluated in accordance with the following evaluation criteria.

### (Evaluation criteria)

⊚: The ratio was 1.0 to less than 1.2.
○: The ratio was 1.2 to less than 1.5.
△: The ratio was 1.5 to less than 2.0.
×: The ratio was 2.0 or more.

### [Evaluation 3]

### (Adhesion of a coating film to a substrate when a blocked isocyanate composition after storage in the presence of water was made into the coating film)

An aqueous dispersion of each blocked isocyanate composition was stored at 35°C for 30 days. Then, the stored aqueous dispersion and an acrylic dispersion (manufactured by Nuplex Resin Inc., under the trade name of "SETAQUA 6510", the resin concentration was 42%, and the hydroxy value was 4.2% (based on resin)) were mixed such that the molar equivalent ratio of isocyanate group/hydroxy group became 1.0, followed by diluting the mixture with water such that the final solid content became 40% by mass, and then mixing the resultant to obtain a coating composition. The obtained coating composition was coated on a soft steel plate such that the dried film thickness became 45 µm, followed by curing the coating composition at 140°C for 60 minutes to form a coating film. The adhesion test of the obtained coating film was conducted in accordance with JIS K 5600-5-6. The adhesion of the coating film to a substrate after storage was evaluated in accordance with the following evaluation criteria.

### (Evaluation criteria)

⊚: The number of peelings was 0.
○: The number of peelings was 1 to less than 10.
△: The number of peelings was 10 to less than 50.
×: The number of peelings was 50 or more.

### [Evaluation 4]

### (Chemical resistance)

Each blocked isocyanate composition and an acrylic dispersion (manufactured by Nuplex Resin Inc., under the trade name of "SETAQUA 6510", the resin concentration was 42%, and the hydroxy value was 4.2% (based on resin)) were mixed such that the molar equivalent ratio of isocyanate group/hydroxy group became 1.0, followed by diluting the mixture with water such that the final solid content became 40% by mass, and then mixing the resultant to obtain a coating composition. The obtained coating composition was coated on a soft steel plate such that the dried film thickness became 45 µm, followed by curing the coating composition at 140°C for 60 minutes to form a coating film. A gasohol liquid (a mixture of 40% by mass of isooctane, 40% by mass of toluene, and 20% by mass of ethanol) was spotted on the obtained coating film with a diameter of about 1 cm, covered with a cover glass, and maintained at 23°C and 50% humidity, followed by leaving the resultant for 24 hours. Then, the gasohol liquid was wiped off, the external appearance of the coating film was observed, and the chemical resistance was evaluated in accordance with the following evaluation criteria.

### (Evaluation criteria)

⊚: No change was observed.
○: The contour of the liquid was slightly observed.
△: The contour of the liquid was clearly observed.

### [Evaluation 5]

### (Impact resistance)

A coating composition and a coating film were prepared by the method described in the section "Evaluation 4" for evaluating the "chemical resistance". An impact was applied to the obtained coating film from the face (surface) on which a coating film of a soft steel plate was formed using a weight (500 g, 1/4 inch) by a DuPont impact tester to measure the height of the weight when damage appeared in the coating film. The impact resistance was evaluated based on the measured height of the weight in accordance with the following evaluation criteria.

### (Evaluation criteria)

⊚: The coating film was not damaged even when the height was 50 cm.
○: The coating film was damaged when the height was 50 cm.
△: The coating film was damaged when the height was 40 cm.
×: The coating film was damaged when the height was 30 cm or less.

### <Synthesis of triisocyanate compound (A)>

### [Synthesis Example 1]

### (Synthesis of NTI (A-1))

1060 g of 4-aminomethyl-1,8-octamethylenediamine (hereinafter referred to as "triamine") was dissolved in 1500 g of methanol in a four-necked flask equipped with a stirrer, a thermometer and a gas inlet tube. 1800 mL of 35 v/v% concentrated hydrochloric acid was gradually added dropwise to the resultant while conducting cooling. Methanol and water were removed under reduced pressure to concentrate the resultant, followed by drying the resultant at 60°C/5 mmHg for 24 hours to obtain triamine hydrochloride as a white solid. 650 g of the obtained triamine hydrochloride was made into a fine powder, and then suspended in 5,000 g of o-dichlorobenzene, followed by increasing the temperature of the reaction solution while conducting stirring. When the temperature of the reaction solution reached 100°C, blowing of phosgene into the reaction solution was started at 200 g/hour. The temperature of the reaction solution was further increased and then maintained at 180°C while continuing blowing of phosgene for 12 hours. Dissolved phosgene and the solvent were distilled off under reduced pressure, followed by conducting vacuum distillation to obtain 420 g of colorless and transparent 4-isocyanatomethyl-1,8-octamethylene diisocyanate (NTI) (A-1) having a boiling point of 161°C/1.2 mmHg to 163°C/1.2 mmHg. The NCO amount ratio of NTI (A-1) was 50.0% by mass.

### [Synthesis Example 2]

### (Synthesis of LTI (A-2))

122.2 g of ethanolamine, 100 mL of o-dichlorobenzene, and 420 mL of toluene were placed in a four-necked flask equipped with a stirrer, a thermometer, and a gas inlet tube, and ice-cooled hydrogen chloride gas was introduced thereinto to convert ethanolamine into a hydrochloride. Then, 182.5 g of lysine hydrochloride was added thereto, the resultant reaction solution was heated to 80°C to dissolve ethanolamine hydrochloride, followed by introducing hydrogen chloride gas thereinto to obtain lysine dihydrochloride. Furthermore, hydrogen chloride gas was passed through the resultant at 20 ml/min to 30 ml/min and the reaction solution was heated to 116°C and maintained at this temperature until water stopped being distilled off. The resultant reaction mixture was recrystallized in a mixture of methanol and ethanol to obtain 165 g of lysine β-aminoethyl ester trihydrochloride. 100 g of this lysine β-aminoethyl ester trihydrochloride was made into a fine powder, and then suspended in 1200 mL of o-dichlorobenzene, followed by raising the temperature of the reaction solution while conducting stirring. When the temperature of the reaction solution reached 120°C, blowing of phosgene into the reaction solution was started at a rate of 0.4 mol/hour and maintained for 10 hours. Then, the temperature of the reaction solution was further raised to 150°C. The suspension mostly dissolved. The resultant was cooled and filtered, and the dissolved phosgene and solvent were distilled off under reduced pressure, followed by conducting vacuum distillation to obtain 80.4 g of colorless and transparent lysine triisocyanate (LTI) (A-2) having a boiling point of 155°C/0.022 mmHg to 157°C/0.022 mmHg. The NCO amount ratio of LTI (A-2) was 47.1% by mass.

### [Synthesis Example 3]

### (Synthesis of HTI (A-3))

602 g of triethyl 1,3,6-hexamethylenetricarboxylate was reacted with hydrazine hydrate in a conventional manner to obtain 445 g of 1,3,6-hexamethylenetricarboxylic acid trihydrazide. Then, 1,3,6-hexamethylenetricarboxylic acid trihydrazide was reacted with sodium nitrite in an aqueous solution in the presence of hydrochloric acid to form the corresponding triazide, followed by extracting with benzene and then drying the extract. The resultant benzene solution was added dropwise into a benzene reflux to conduct thermal decomposition. Benzene was distilled off from the resultant, followed by subjecting the obtained triisocyanate to a rectification distillation under vacuum to obtain 246 g of colorless and transparent 1,3,6-hexamethylene triisocyanate (HTI) (A-3) having a boiling point of 152°C/1.3 mmHg to 154°C/1.3 mmHg. The NCO amount ratio of HTI (A-3) was 60.1% by mass.

### <Preparation of blocked isocyanate composition>

### [Example1]

### (Preparation of blocked isocyanate composition BI-a1 and an aqueous dispersion thereof)

A four-necked flask equipped with a stirrer, a thermometer, a reflux condenser, and a nitrogen blowing tube was filled with a nitrogen atmosphere, and 100 g of NTI (A-1) obtained in Synthesis Example 1, 44.6 g of polycarbonate diol (B-3) (manufactured by ASAHI KASEI KABUSHIKI KAISHA under the trade name of "DURANOL T5650E", the number-average molecular weight of which was 500), and 123.2 g of polyethylene glycol monomethyl ether (manufactured by NIPPON NYUKAZAI CO., LTD., under the trade name of "MPG-081") (C-1) were charged therein and maintained at 120°C for 4 hours under a nitrogen atmosphere. Then, 80.0 g of 3,5-dimethylpyrazole (D-1) was added to the resultant at 80°C, and it was confirmed in the infrared spectrum that the characteristic absorption of isocyanate groups had disappeared to obtain a blocked isocyanate composition BI-a1.

Then, 811.7 g of water was added thereto while maintaining the liquid temperature from 30°C to 80°C, followed by stirring the mixture for 30 minutes to obtain an aqueous dispersion containing the blocked isocyanate composition BI-a1 and water.

### [Examples 2 to 24, and Comparative Examples 1 and 2]

### (Preparation of blocked isocyanate compositions BI-a2 to BI-a24 and BI-b1 to BI-b2 and aqueous dispersions thereof)

Each blocked isocyanate composition and an aqueous dispersion thereof were prepared by the same method as Example 1, except that the type and the addition amount of the triisocyanate compound (A), other isocyanate compound (A'), the diol compound (B), the hydrophilic compound (C) and the blocking agent (D), as well as the addition amount of water were as shown in Tables 1 to 5.

In Tables 1 to 5, the below-mentioned compounds were used as the triisocyanate compound (A), other isocyanate compound (A'), the diol compound (B), the hydrophilic compound (C) or the blocking agent (D).

### (Type of triisocyanate compound (A))

A-1: NTI synthesized in Synthesis Example 1
A-2: LTI synthesized in Synthesis Example 2
A-3: HTI synthesized in Synthesis Example 3

### (Type of other isocyanate compound (A'))

A'-1: HDI-based polyisocyanate (manufactured by ASAHI KASEI KABUSHIKI KAISHA, under the trade name of "DURANATE TKA-100", the NCO amount ratio of which was 21.7% by mass.)

### (Type of diol compound (B))

B-1: 1,4-butanediol (molecular weight: 90)
B-2: ethylene glycol (molecular weight: 62)
B-3: polycarbonate diol (manufactured by ASAHI KASEI KABUSHIKI KAISHA, under the trade name of "DURANOL T5650E", the number-average molecular weight of which was 500.)
B-4: polycarbonate diol (manufactured by ASAHI KASEI KABUSHIKI KAISHA, under the trade name of "DURANOL T5651", the number-average molecular weight of which was 1000.)
B-5: polycarbonate diol (manufactured by ASAHI KASEI KABUSHIKI KAISHA, under the trade name of "DURANOL T5652", the number-average molecular weight of which was 2000.)
B-6: polypropylene glycol (manufactured by AGC Inc., under the trade name of "EXCENOL (registered trademark) 420", the number-average molecular weight of which was 400.)
B-7: polypropylene glycol (manufactured by AGC Inc., under the trade name of "EXCENOL (registered trademark) 3020", the number-average molecular weight of which was 3200.)
B-8: polycaprolactone diol (manufactured by Daicel Corporation, under the trade name of "PLACCEL (registered trademark) 205", the number-average molecular weight of which was 530.)
B-9: polycaprolactone diol (manufactured by Daicel Corporation, under the trade name of "PLACCEL (registered trademark) 212", the number-average molecular weight of which was 1250.)
B-10: polycaprolactone diol (manufactured by Daicel Corporation, under the trade name of "PLACCEL (registered trademark) 240", the number-average molecular weight of which was 4000.)
B-11: polyethylene glycol (manufactured by SANYO CHEMICAL INDUSTRIES, LTD., under the trade name of "PEG-400", the number-average molecular weight of which was 400.)
B-12: polyethylene glycol (manufactured by SANYO CHEMICAL INDUSTRIES, LTD., under the trade name of "PEG-1000", the number-average molecular weight of which was 1000.)
B-13: polyethylene glycol (manufactured by SANYO CHEMICAL INDUSTRIES, LTD., under the trade name of "PEG-2000", the number-average molecular weight of which was 2000.)
B-14: polybutadiene having two hydroxy groups (manufactured by Nippon Soda Co., Ltd., under the trade name of "B-2000", the number-average molecular weight of which was 2100.)

### (Type of hydrophilic compound (C))

C-1: polyethylene glycol monomethyl ether (manufactured by NIPPON NYUKAZAI CO., LTD., under the trade name of "MPG-081", the ethylene oxide addition number of which was 15.0)
C-2: polyethylene glycol monomethyl ether (manufactured by NIPPON NYUKAZAI CO., LTD., under the trade name of "MPG-130", the ethylene oxide addition number of which was 9.0.)
C-3: polyethylene glycol monobutylether (manufactured by NIPPON NYUKAZAI CO., LTD., under the trade name of "BTG-H", the ethylene oxide addition number of which was 4.0)
C-4: hydroxypivalic acid neutralized with dimethylethanolamine

### (Type of blocking agent (D))

D-1: 3,5-dimethylpyrazole
D-2: diisopropylamine
D-3: methylethylketoxime

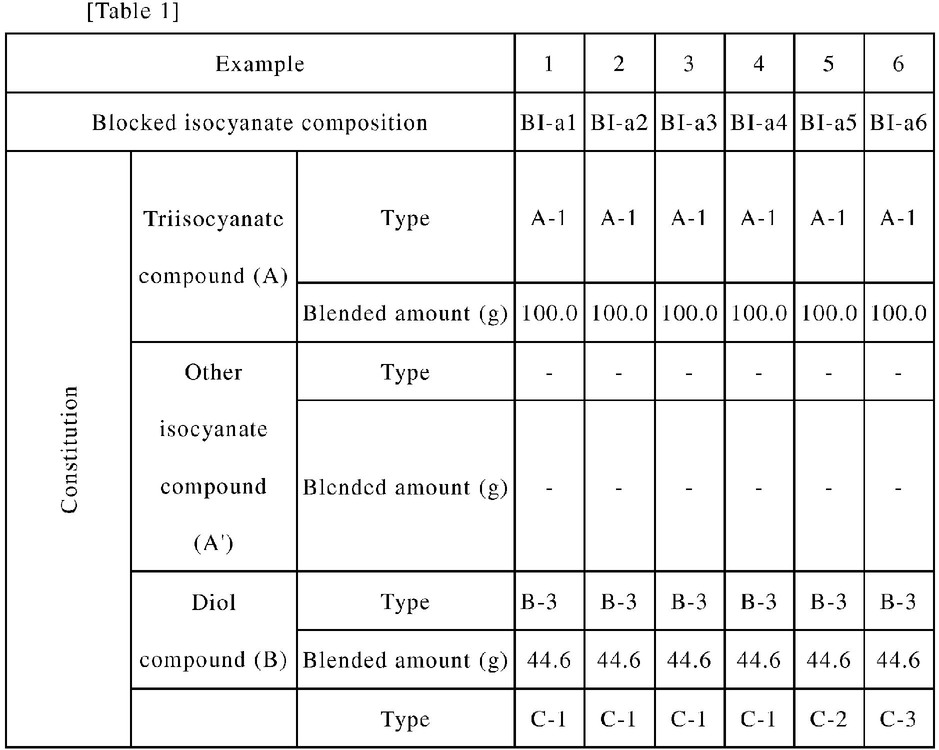

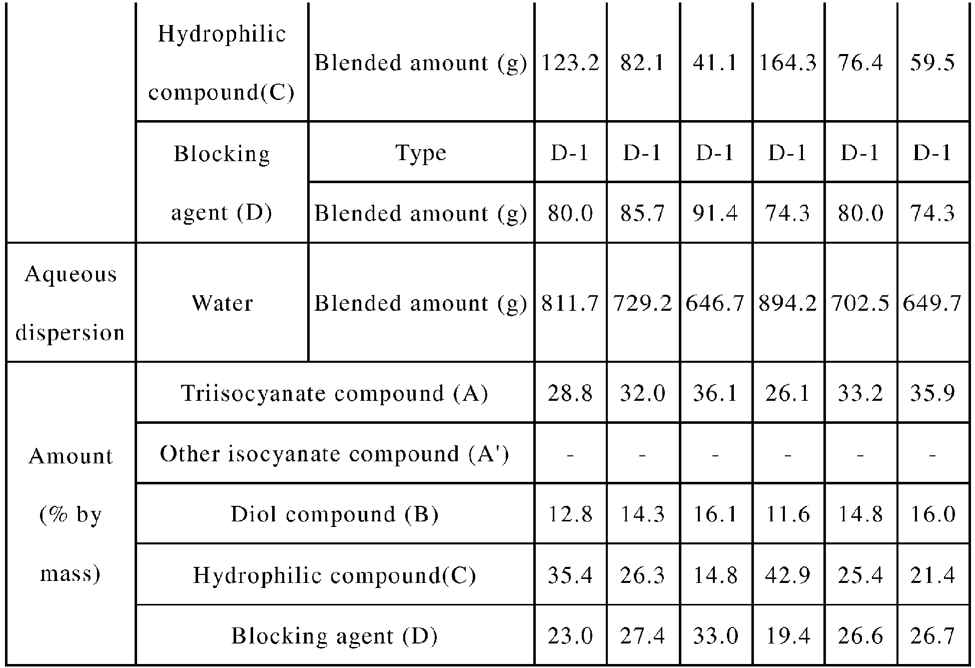

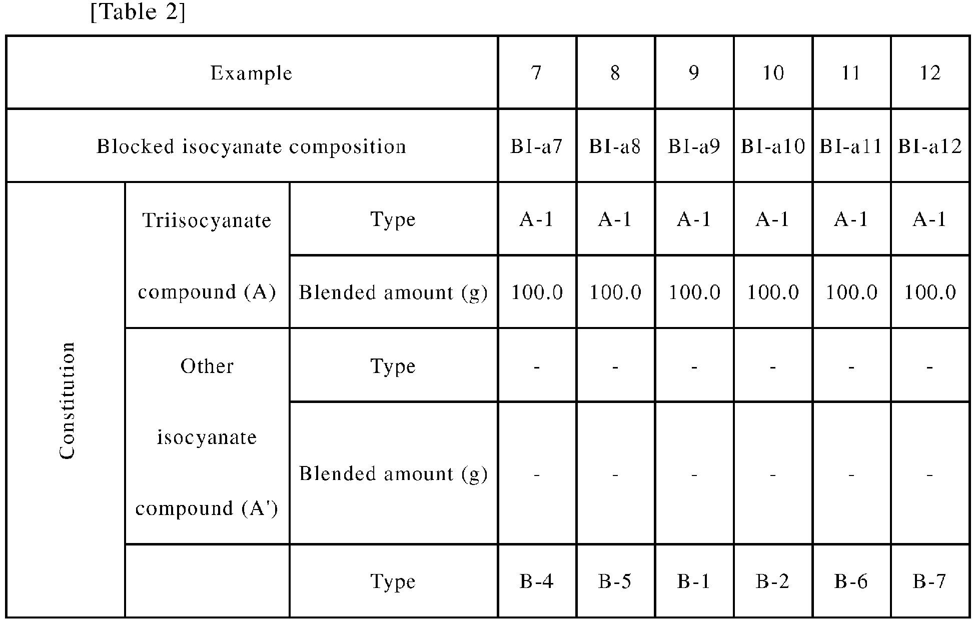

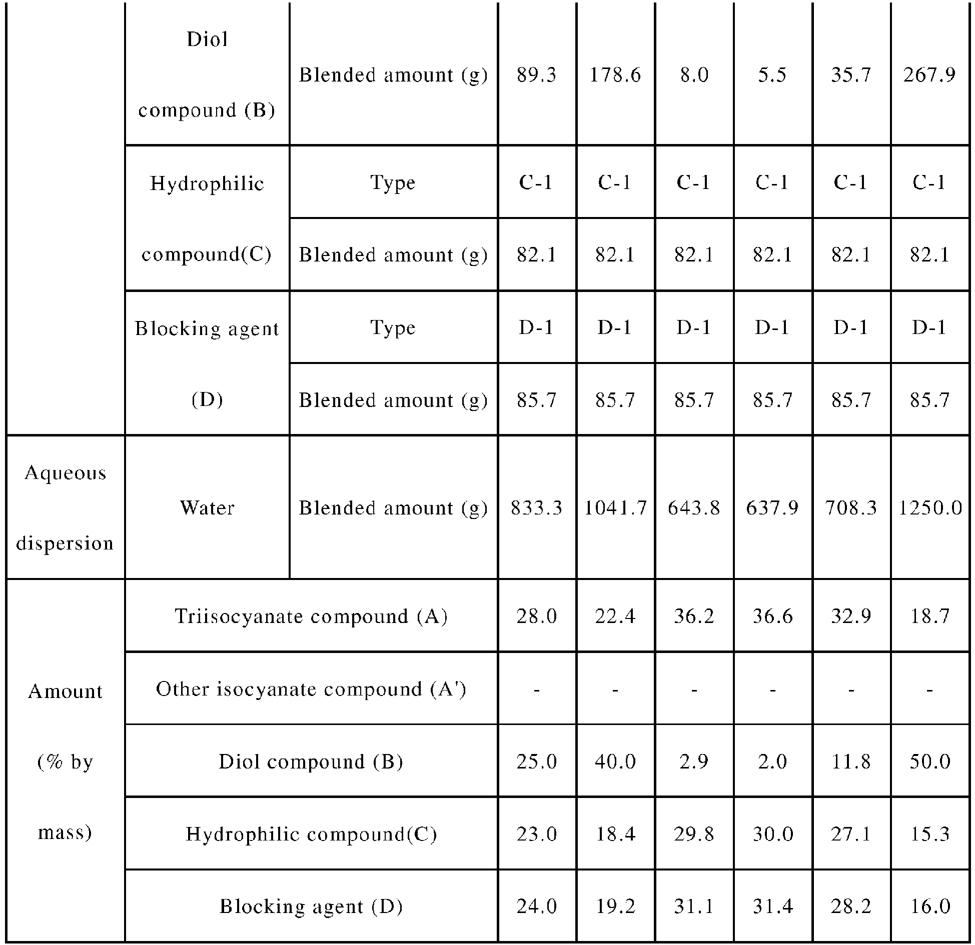

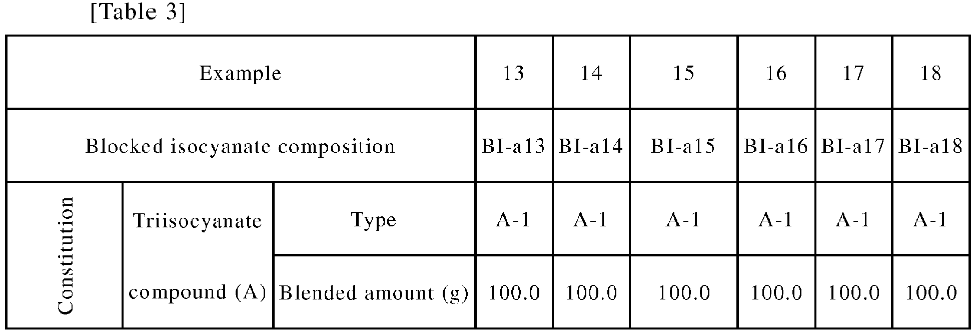

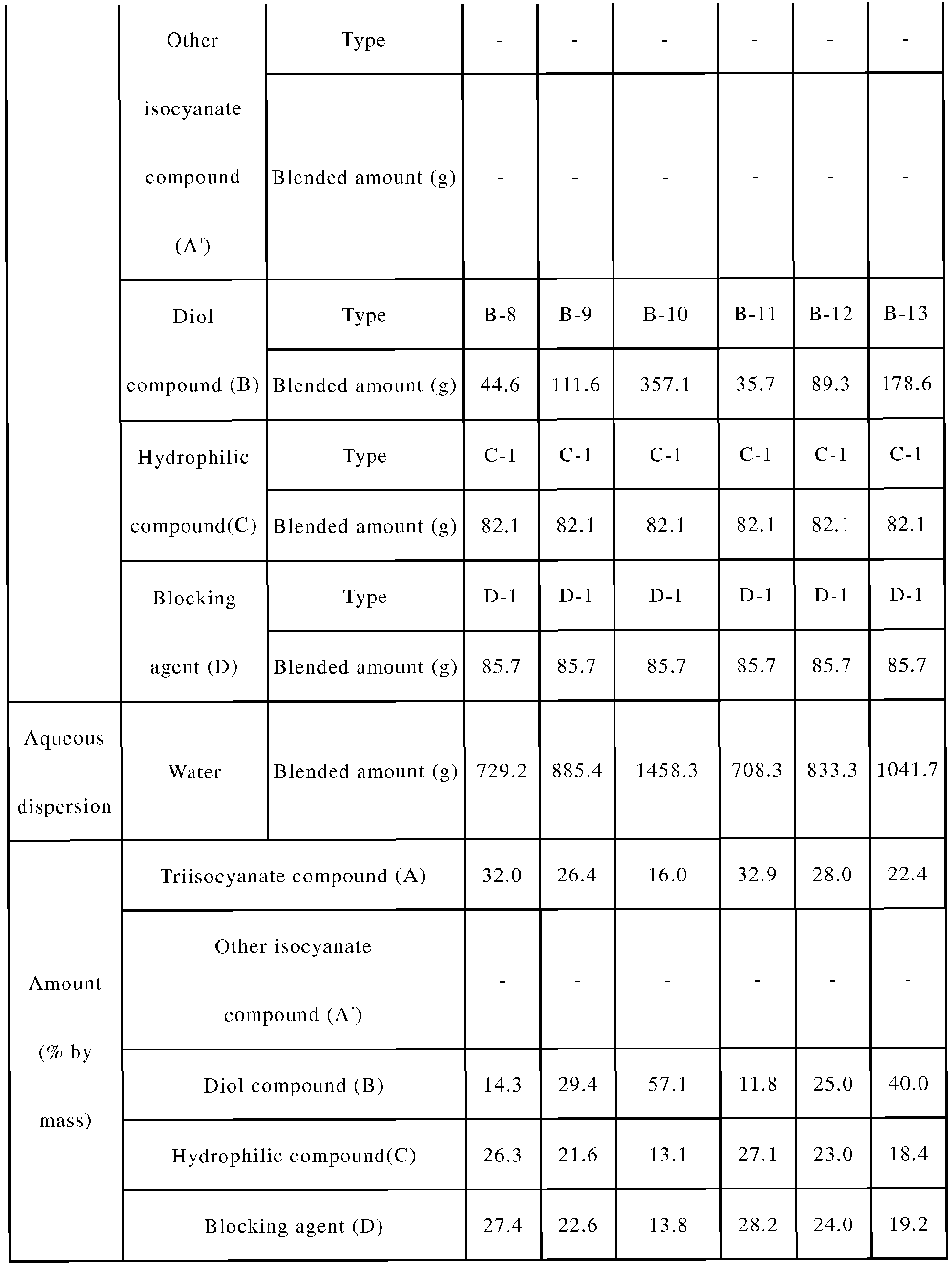

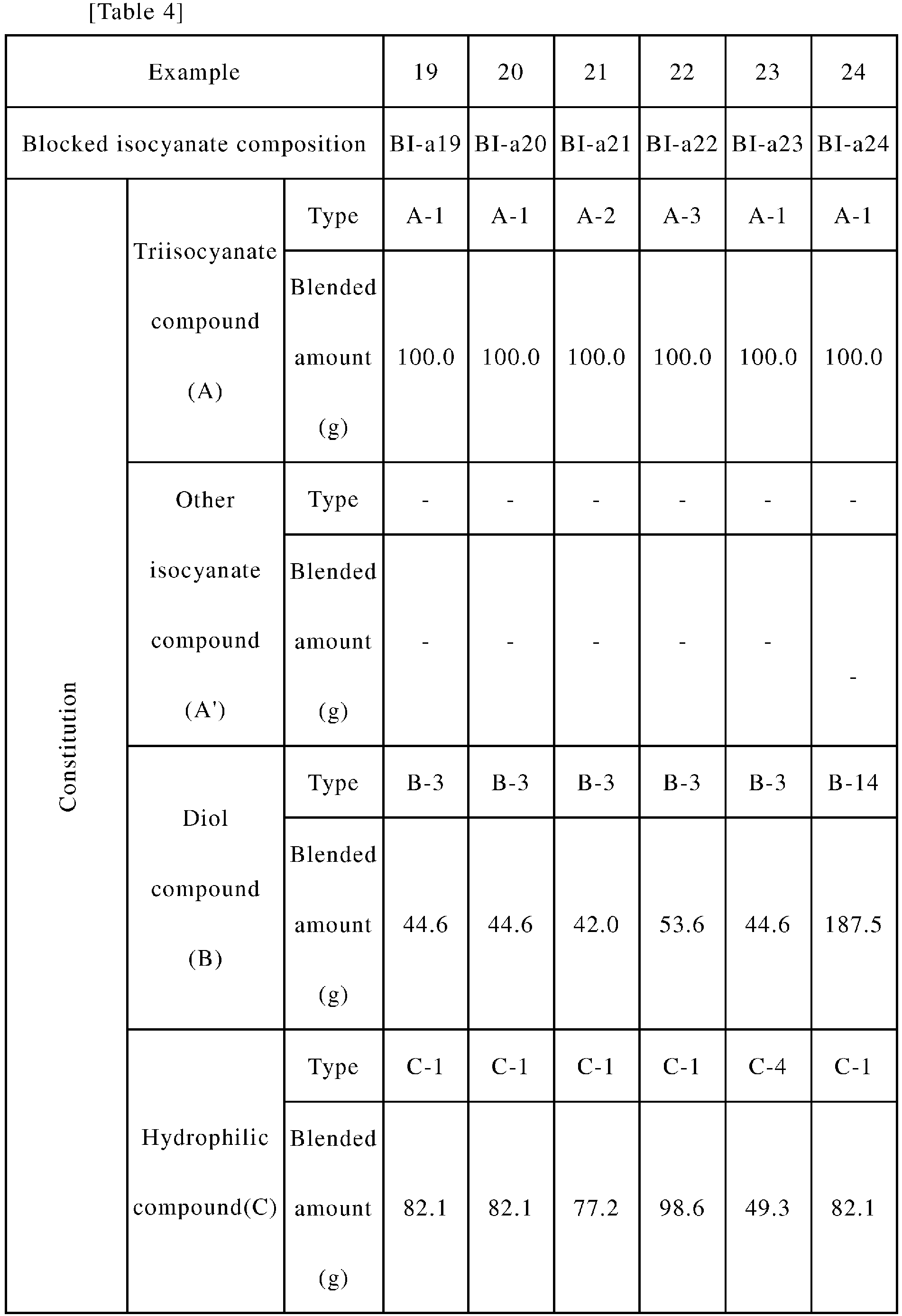

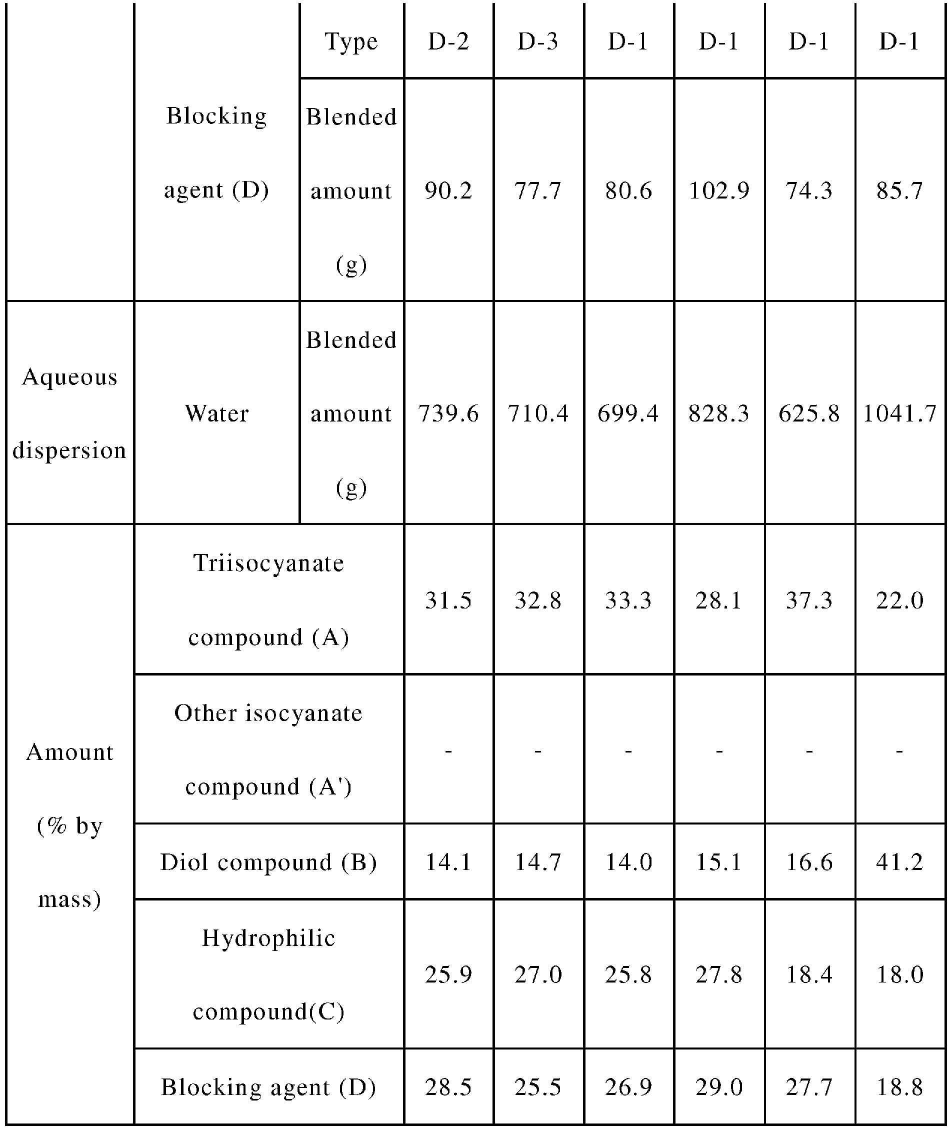

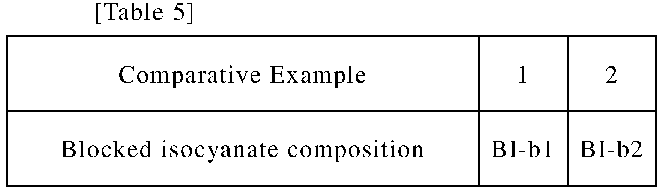

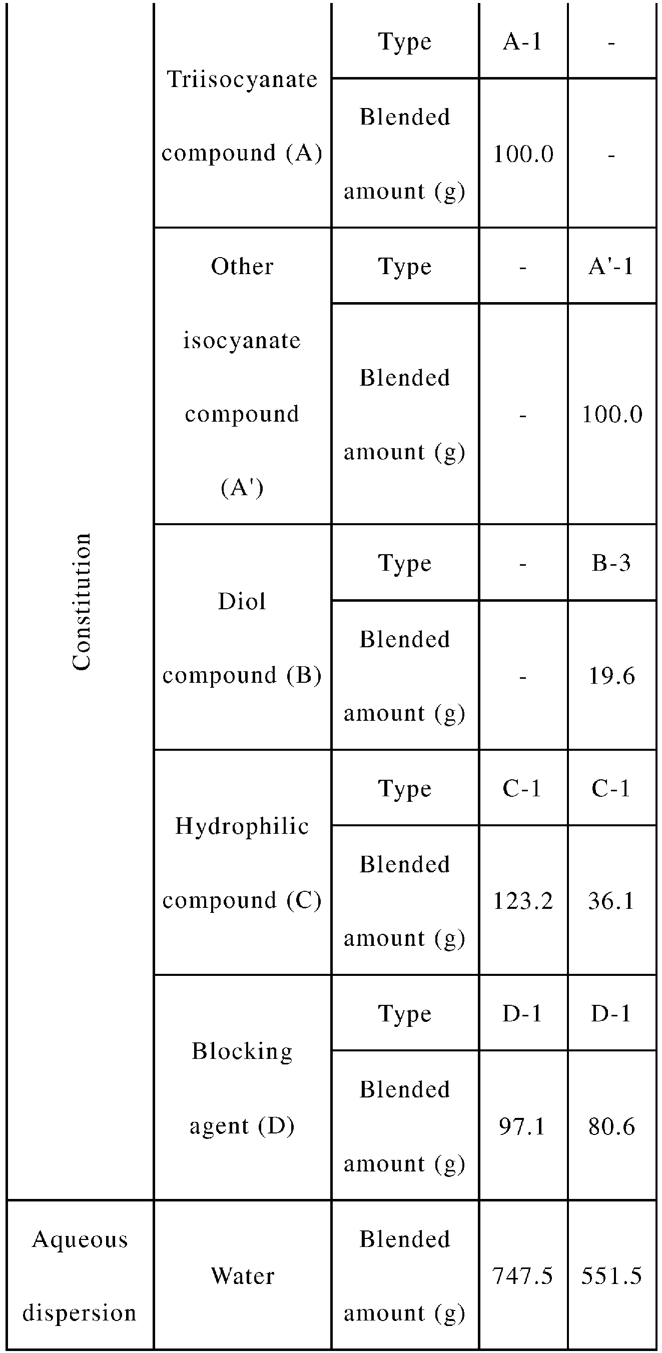

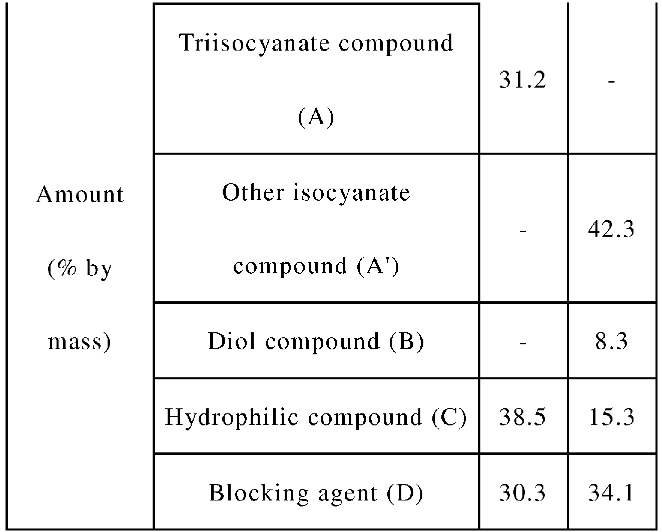

**[Table 6]**

| Example | | 1 | 2 | 3 | 4 | 5 | 6 |
|---|---|---|---|---|---|---|---|
| Physical properties | Calculated NCO% (% by mass) | 14.4 | 16.0 | 18.0 | 13.0 | 16.6 | 18.0 |
| | Polymerization degree n31 of hydrophilic compound (C) | 15.0 | 15.0 | 15.0 | 15.0 | 9.0 | 4.0 |
| | Average dispersed particle size (nm) | 12 | 15 | 150 | 10 | 15 | 80 |
| Evaluation | External appearance of aqueous dispersion | ○ | ○ | ○ | ○ | ○ | ○ |
| | Particle size stability during storage | ⊚ | ⊚ | △ | ⊚ | ○ | △ |
| | Adhesion of coating film made from aqueous dispersion after storage to substrate | ○ | ⊚ | ⊚ | △ | ⊚ | ⊚ |
| | Chemical resistance of coating film | ⊚ | ⊚ | ⊚ | ⊚ | ⊚ | ⊚ |
| | Impact resistance of coating film | ⊚ | ⊚ | ⊚ | ⊚ | ⊚ | ⊚ |

**[Table 7]**

| Example | | 7 | 8 | 9 | 10 | 11 | 12 |
|---|---|---|---|---|---|---|---|
| Physical properties | Calculated NCO% (% by mass) | 14.0 | 11.2 | 18.1 | 18.3 | 16.5 | 9.3 |
| | Polymerization degree n31 of hydrophilic compound (C) | 15.0 | 15.0 | 15.0 | 15.0 | 15.0 | 15.0 |
| | Average dispersed particle size (nm) | 20 | 30 | 100 | 150 | 50 | 130 |

| | | | | | | | |
|---|---|---|---|---|---|---|---|
| Evaluation | External appearance of aqueous dispersion | ○ | ○ | ○ | ○ | ○ | ○ |
| | Particle size stability during storage | ⊚ | ○ | △ | △ | ○ | △ |
| | Adhesion of coating film made from aqueous dispersion after storage to substrate | ⊚ | ⊚ | ○ | ○ | ○ | ○ |
| | Chemical resistance of coating film | ⊚ | ○ | ⊚ | ⊚ | ○ | △ |
| | Impact resistance of coating film | ⊚ | ⊚ | △ | △ | ○ | ○ |

**[Table 8]**

| Example | | 13 | 14 | 15 | 16 | 17 | 18 |
|---|---|---|---|---|---|---|---|
| Physical properties | Calculated NCO% (% by mass) | 16.0 | 13.2 | 8.0 | 16.5 | 14.0 | 11.2 |
| | Polymerization degree n31 of hydrophilic compound (C) | 15.0 | 15.0 | 15.0 | 15.0 | 15.0 | 15.0 |
| | Average dispersed particle size (nm) | 25 | 25 | 150 | 50 | 60 | 80 |
| Evaluation | External appearance of aqueous dispersion | ○ | ○ | ○ | ○ | ○ | ○ |
| | Particle size stability during storage | ⊚ | ⊚ | △ | ○ | ○ | △ |
| | Adhesion of coating film made from aqueous dispersion after storage to substrate | ⊚ | ⊚ | ⊚ | ○ | ○ | ○ |
| | Chemical resistance of coating film | ⊚ | ⊚ | △ | ○ | ○ | ○ |
| | Impact resistance of coating film | ○ | ○ | ○ | ○ | ○ | ○ |

**[Table 9]**

| Example | | 19 | 20 | 21 | 22 | 23 | 24 |
|---|---|---|---|---|---|---|---|
| Physical properties | Calculated NCO% (% by mass) | 15.8 | 16.4 | 16.7 | 14.1 | 18.6 | 11.0 |
| | Polymerization degree n31 of hydrophilic compound (C) | 15.0 | 15.0 | 15.0 | 15.0 | - | 15.0 |
| | Average dispersed particle size (nm) | 20 | 35 | 15 | 12 | 35 | 30 |
| Evaluation | External appearance of aqueous dispersion | ○ | ○ | ○ | ○ | ○ | ○ |
| | Particle size stability during storage | ⊚ | ⊚ | ⊚ | ⊚ | ○ | ○ |
| | Adhesion of coating film made from aqueous dispersion after storage to substrate | ⊚ | ⊚ | ⊚ | ⊚ | ⊚ | ⊚ |
| | Chemical resistance of coating film | ⊚ | ⊚ | ⊚ | ⊚ | △ | ⊚ |
| | Impact resistance of coating film | ○ | ○ | ○ | ○ | ○ | ⊚ |

**[Table 10]**

| Comparative Example | | 1 | 2 |
|---|---|---|---|
| Physical properties | Calculated NCO% (% by mass) | 15.6 | 9.3 |
| | Polymerization degree n31 of hydrophilic compound (C) | 15.0 | 15.0 |
| | Average dispersed particle size (nm) | - (Precipitated) | 30 |
| Evaluation | External appearance of aqueous dispersion | × | ○ |
| | Particle size stability during storage | × | △ |
| | Adhesion of coating film made from aqueous dispersion after storage to substrate | × | ○ |
| | Chemical resistance of coating film | ⊚ | △ |
| | Impact resistance of coating film | × | × |

As shown in Tables 6 to 9, the blocked isocyanate compositions BI-a1 to BI-a24 (Examples 1 to 24) each containing a blocked isocyanate formed from a triisocyanate compound (A) having a particular structure, a diol compound (B), a hydrophilic compound (C) and a blocking agent (D) exhibited favorable dispersion stability in water, particle size stability during storage when the blocked isocyanate composition was made into an aqueous dispersion, adhesion of a coating film to a substrate when the blocked isocyanate composition after storage in the presence of water was made into the coating film, and chemical resistance and impact resistance when made into a coating film.

In comparison of the block polyisocyanate compositions BI-a2, BI-a7 to BI-a18 (Examples 2 and 7 to 18) in which the types and blended amounts of the diol compounds (B) were different from each other, the blocked isocyanate compositions in which the amount of the structural unit formed from the diol compound (B) was 11.8% by mass to 29.4% by mass tended to exhibit excellent particle size stability during storage when made into an aqueous dispersion.

In comparison of the blocked isocyanate compositions BI-a1 to BI-a4 (Examples 1 to 4) in which the blended amounts of the hydrophilic compounds (C) were different from each other, an increase in the blended amount of the hydrophilic compound (C) tended to improve the particle size stability during storage when the blocked isocyanate composition was made into an aqueous dispersion, whilst a decrease in the blended amount of the hydrophilic compound (C) tended to improve the adhesion stability of a coating film to a substrate when the blocked isocyanate composition after storage in the presence of water was made into the coating film.

In comparison of the blocked isocyanate compositions BI-a2, BI-a5, and BI-a6 (Examples 2, 5 and 6) in which the ethylene oxide addition numbers in the hydrophilic compounds (C) were different from each other, an increase in the ethylene oxide addition number tended to improve the particle size stability during storage when the blocked isocyanate composition was made into an aqueous dispersion.

In comparison of the blocked polyisocyanate compositions BI-a4 and BI-a23 (Examples 4 and 23) in which the types of the hydrophilic compounds (C) were different from each other, the blocked isocyanate composition BI-a4 in which the compound C-1 was used as the hydrophilic compound (C) tended to exhibit better particle size stability during storage when the the blocked isocyanate composition was made into an aqueous dispersion, as well as the chemical resistance and the impact resistance when made into a coating film, whilst the blocked isocyanate composition BI-a23 in which the compound C-4 was used as the hydrophilic compound (C) tended to exhibit better adhesion stability of a coating film to a substrate when the blocked isocyanate composition after storage in the presence of water was made into a coating film.

In contrast, the blocked isocyanate composition BI-b1 (Comparative Example 1) containing a blocked isocyanate formed from the triisocyanate compound (A) having a particular structure, the hydrophilic compound (C) and the blocking agent (D) without using any diol compounds (B) exhibited unfavorable dispersion stability in water, particle size stability during storage when the blocked isocyanate composition was made into an aqueous dispersion, adhesion stability of a coating film to a substrate when the blocked isocyanate composition after storage in the presence of water was made into the coating film, and impact resistance when the blocked isocyanate composition was made into a coating film.

In addition, the blocked isocyanate composition BI-b2 (Comparative Example 2) containing a blocked isocyanate formed from HDI-based polyisocyanate indicated as other isocyanate compound A'-1 instead of a triisocyanate compound (A), a diol compound (B), a hydrophilic compound (C) and a blocking agent (D) exhibited unfavorable impact resistance when made into a coating film.

### [Industrial Applicability]

The blocked isocyanate composition of the present embodiment makes it possible to provide a blocked isocyanate composition having favorable dispersion stability in water, realizing both a constant particle size during storage when the blocked isocyanate composition is made into an aqueous dispersion and stable adhesion of a coating film to a substrate when the blocked isocyanate composition after storage in the presence of water is made into a coating film, and exhibiting excellent chemical resistance and impact resistance when the blocked isocyanate composition is made into a coating film. The coating composition of the present embodiment contains the blocked isocyanate composition, and exhibits excellent chemical resistance and impact resistance when made into a coating film. The coating composition of the present embodiment is favorably used in an automobile coating material, an architectural exterior coating material, a fiber treatment agent, a tackifier, a heat release agent, a film coating agent, or the like, for example.

## Claims

1. A blocked isocyanate composition comprising a blocked isocyanate formed from:
a triisocyanate compound (A) of general formula (I);
a diol compound (B);
a hydrophilic compound (C); and
a blocking agent (D), 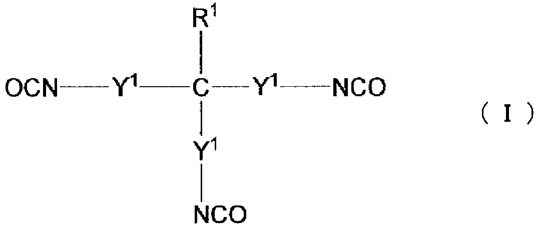
(in the general formula (I), each of plural Y¹ is independently a single bond or a C1-20 divalent hydrocarbon group which may have at least one structure selected from the group consisting of an ester structure and an ether structure, each of plural Y¹ is identical to or different from each other, and R¹ is a hydrogen atom or a C1-12 monovalent hydrocarbon group).

2. The blocked isocyanate composition according to claim 1, wherein the diol compound (B) is at least one selected from the group consisting of non-polymerizable diols, polyester diols, polycarbonate diols and polyolefin diols.

3. The blocked isocyanate composition according to claim 1 or 2, wherein a molecular weight of the diol compound (B) is 90 to 5000.

4. The blocked isocyanate composition according to claim 3, wherein the molecular weight of the diol compound (B) is 400 to 2000.

5. The blocked isocyanate composition according to any one of claims 1 to 4, wherein an amount of a structural unit formed from the diol compound (B) relative to a mass of the blocked isocyanate is 10.0% by mass to 40.0% by mass.

6. The blocked isocyanate composition according to any one of claims 1 to 5, wherein the hydrophilic compound (C) is a nonionic hydrophilic compound.

7. The blocked isocyanate composition according to claim 6, wherein the hydrophilic compound (C) is polyethylene glycol monomethyl ether.

8. The blocked isocyanate composition according to claim 7, wherein an ethylene oxide addition number of the polyethylene glycol monomethyl ether is 7.0 to 18.0.

9. The blocked isocyanate composition according to any one of claims 1 to 8, wherein an amount of a structural unit formed from the hydrophilic compound (C) relative to a mass of the blocked isocyanate is 20.0% by mass to 40.0% by mass.

10. The blocked isocyanate composition according to any one of claims 1 to 9, wherein the triisocyanate compound (A) is 4-isocyanatomethyl-1,8-octamethylene diisocyanate.

11. The blocked isocyanate composition according to any one of claims 1 to 10, wherein the blocking agent (D) is at least one compound selected from the group consisting of oxime-based compounds, amine-based compounds, and pyrazole-based compounds.

12. An aqueous dispersion comprising: a blocked isocyanate composition of any one of claims 1 to 11; and water.

13. The aqueous dispersion according to claim 12, wherein an average dispersed particle size of the blocked isocyanate composition is 10 nm to 200 nm.

14. A coating composition comprising: a blocked isocyanate composition of any one of claims 1 to 11; and a polyol.

15. A coating film formed by curing a coating composition of claim 14.

## Patentansprüche

1. Zusammensetzung von blockiertem Isocyanat, umfassend ein blockiertes Isocyanat, welches gebildet ist aus:
einer Triisocyanatverbindung (A) der allgemeinen Formel (I);
einer Diolverbindung (B);
einer hydrophilen Verbindung (C); und
einem Blockierungsmittel (D), 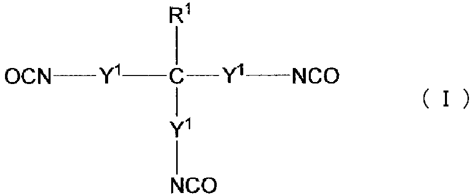
(in der allgemeinen Formel (I) ist jedes der mehreren Y¹ unabhängig eine Einfachbindung oder eine zweibindige C1-20-Kohlenwasserstoffgruppe, die mindestens eine Struktur aufweisen kann, ausgewählt aus der Gruppe bestehend aus einer Esterstruktur und einer Etherstruktur, wobei jedes der mehreren Y¹ gleich oder verschieden voneinander ist, und R¹ ein Wasserstoffatom oder eine einbindige C1-12-Kohlenwasserstoffgruppe ist).

2. Zusammensetzung von blockiertem Isocyanat nach Anspruch 1, wobei die Diolverbindung (B) mindestens eine ist, ausgewählt aus der Gruppe bestehend aus nicht-polymerisierbaren Diolen, Polyesterdiolen, Polycarbonatdiolen und Polyolefindiolen.

3. Zusammensetzung von blockiertem Isocyanat nach Anspruch 1 oder 2, wobei das Molekulargewicht der Diolverbindung (B) 90 bis 5000 beträgt.

4. Zusammensetzung von blockiertem Isocyanat nach Anspruch 3, wobei das Molekulargewicht der Diolverbindung (B) 400 bis 2000 beträgt.

5. Zusammensetzung von blockiertem Isocyanat nach einem der Ansprüche 1 bis 4, wobei die Menge einer aus der Diolverbindung (B) gebildeten Struktureinheit, bezogen auf die Masse des blockierten Isocyanats, 10,0 Massen-% bis 40,0 Massen- % beträgt.

6. Zusammensetzung von blockiertem Isocyanat nach einem der Ansprüche 1 bis 5, wobei die hydrophile Verbindung (C) eine nichtionische hydrophile Verbindung ist.

7. Zusammensetzung von blockiertem Isocyanat nach Anspruch 6, wobei die hydrophile Verbindung (C) Polyethylenglycolmonomethylether ist.

8. Zusammensetzung von blockiertem Isocyanat nach Anspruch 7, wobei die Ethylenoxid-Additionszahl des Polyethylenglycolmonomethylethers 7,0 bis 18,0 beträgt.

9. Zusammensetzung von blockiertem Isocyanat nach einem der Ansprüche 1 bis 8, wobei die Menge einer aus der hydrophilen Verbindung (C) gebildeten Struktureinheit, bezogen auf die Masse des blockierten Isocyanats 20,0 Massen-% bis 40,0 Massen-% beträgt.

10. Zusammensetzung von blockiertem Isocyanat nach einem der Ansprüche 1 bis 9, wobei die Triisocyanatverbindung (A) 4-Isocyanatomethyl-1,8-octamethylen-diisocyanat ist.

11. Zusammensetzung von blockiertem Isocyanat nach einem der Ansprüche 1 bis 10, wobei das Blockierungsmittel (D) mindestens eine Verbindung ist, ausgewählt aus der Gruppe bestehend aus Verbindungen auf Oximbasis, Verbindungen auf Aminbasis und Verbindungen auf Pyrazolbasis.

12. Wässrige Dispersion, umfassend: eine Zusammensetzung von blockiertem Isocyanat nach einem der Ansprüche 1 bis 11 und Wasser.

13. Wässrige Dispersion nach Anspruch 12, wobei die mittlere dispergierte Teilchengröße der eine Zusammensetzung von blockiertem Isocyanat 10 nm bis 200 nm beträgt.

14. Beschichtungszusammensetzung, umfassend: eine Zusammensetzung von blockiertem Isocyanat nach einem der Ansprüche 1 bis 11 und ein Polyol.

15. Beschichtungsfilm/-folie, gebildet durch Härten einer Beschichtungszusammensetzung nach Anspruch 14.

## Revendications

1. Composition d'isocyanate bloqué comprenant un isocyanate bloqué formé de :
un composé triisocyanate (A) de formule générale (I) ;
un composé diol (B) ;
un composé hydrophile (C) ; et
un agent bloquant (D), 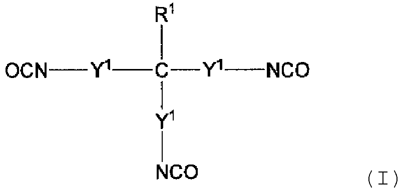
(dans la formule générale (1), chacun des Y¹ est indépendamment une liaison simple ou un groupe hydrocarboné divalent en C1-20 qui peut avoir au moins une structure choisie dans le groupe constitué d'une structure ester et d'une structure éther, chacun des Y¹ est identique ou différent l'un de l'autre, et R¹ est un atome d'hydrogène ou un groupe hydrocarboné monovalent en C1-12).

2. Composition d'isocyanate bloqué selon la revendication 1, dans lequel le composé diol (B) est au moins un composé choisi choisi dans le groupe constitué de diols non polymérisables, de diols de polyester, de diols de polycarbonate et de diols de polyoléfine.

3. Composition d'isocyanate bloqué selon la revendication 1 ou 2, dans lequel une masse moléculaire du composé diol (B) est de 90 à 5 000.

4. Composition d'isocyanate bloqué selon la revendication 3, dans lequel la masse moléculaire du composé diol (B) est de 400 à 2 000.

5. Composition d'isocyanate bloqué selon l'une quelconque des revendications 1 à 4, dans lequel une quantité d'un motif structural formé du composé diol (B) par rapport à une masse de l'isocyanate bloqué est de 10,0 % en masse à 40,0 % en masse.

6. Composition d'isocyanate bloqué selon l'une quelconque des revendications 1 à 5, dans lequel le composé hydrophile (C) est un composé hydrophile non ionique.

7. Composition d'isocyanate bloqué selon la revendication 6, dans lequel le composé hydrophile (C) est l'éther monométhylique de polyéthylène glycol.

8. Composition d'isocyanate bloqué selon la revendication 7, dans lequel un nombre d'addition d'oxyde d'éthylène de l'éther monométhylique de polyéthylène glycol est de 7,0 à 18,0.

9. Composition d'isocyanate bloqué selon l'une quelconque des revendications 1 à 8, dans lequel une quantité d'un motif structural formé à partir du composé hydrophile (C) par rapport à une masse de l'isocyanate bloqué est de 20,0 % en masse à 40,0 % en masse.

10. Composition d'isocyanate bloqué selon l'une quelconque des revendications 1 à 9, dans lequel le composé triisocyanate (A) est le 4-isocyanatométhyl-1,8-octaméthylène diisocyanate.

11. Composition d'isocyanate bloqué selon l'une quelconque des revendications 1 à 10, dans lequel l'agent bloquant (D) est au moins un composé choisi dans le groupe constitué de composés à base d'oxime, de composés à base d'amine et de composés à base de pyrazole.

12. Dispersion aqueuse comprenant : une composition d'isocyanate bloqué selon l'une quelconque des revendications 1 à 11 ; et de l'eau.

13. Dispersion aqueuse selon la revendication 12, dans lequel une taille moyenne de particules dispersées de la composition d'isocyanate bloqué est de 10 nm à 200 nm.

14. Composition de revêtement comprenant : une composition d'isocyanate bloqué selon l'une quelconque des revendications 1 à 11 ; et un polyol.

15. Film de revêtement formé par durcissement d'une composition de revêtement selon la revendication 14.
